# EUROPEAN PATENT APPLICATION

(11) **EP 1 826 552 A1**
(43) Date of publication of application: **29.08.2007**
(21) Application number: 05811389.5
(22) Date of filing: 05.12.2005
(51) Int. Cl.: G01N 13/16, G12B 21/02

(54) **MECHANICAL VIBRATOR AND PRODUCTION METHOD THEREFOR**

(30) Priority: 06.12.2004 JP 2004352728
(71) Applicant: Japan Science and Technology Agency, Kawaguchi-shi, Saitama 332-0012 (JP)
(72) Inventor: KOBAYASHI, Dai, Setagaya-ku, Tokyo 1570061 (JP); KAWAKATSU, Hideki, Setagaya-ku, Tokyo 1580086 (JP); TOSHIYOSHI, Hiroshi, Yokohama-shi, Kanagawa 2270035 (JP)
(74) Representative: Hoarton, Lloyd Douglas Charles
(86) International application number: PCT/JP2005/022268
(87) International publication number: WO 2006/062048

(57) **Abstract**

A mechanical oscillator which defines a starting point of a cantilever at a front edge of a base and can determine the length of the cantilever without depending on an alignment accuracy and an etching amount, and a fabrication method of the mechanical oscillator. The mechanical oscillator, produced by processing a wafer, comprises a base (101) formed from a substrate supporting an SOI wafer and a structure to be a cantilever (102) which is formed from a silicon thin film of the SOI wafer and is horizontally protruding from the base (101), wherein a part of a buried oxide film (103) between the base (101) and the structure to be a cantilever (102) is removed, and a cantilever (104) starting from the front edge (105) of the base (101) is formed by directly jointing the structure to be a cantilever (102) to a part including at least the front edge (105) of the base (101) where the buried oxide film was removed.

## Description

### TECHNICAL FIELD

The present invention relates to a mechanical oscillator and fabrication method thereof, and especially relates to a probe and a sensing member for a mass and a force in a scanning probe microscope comprising a mechanical oscillator.

### BACKGROUND ART

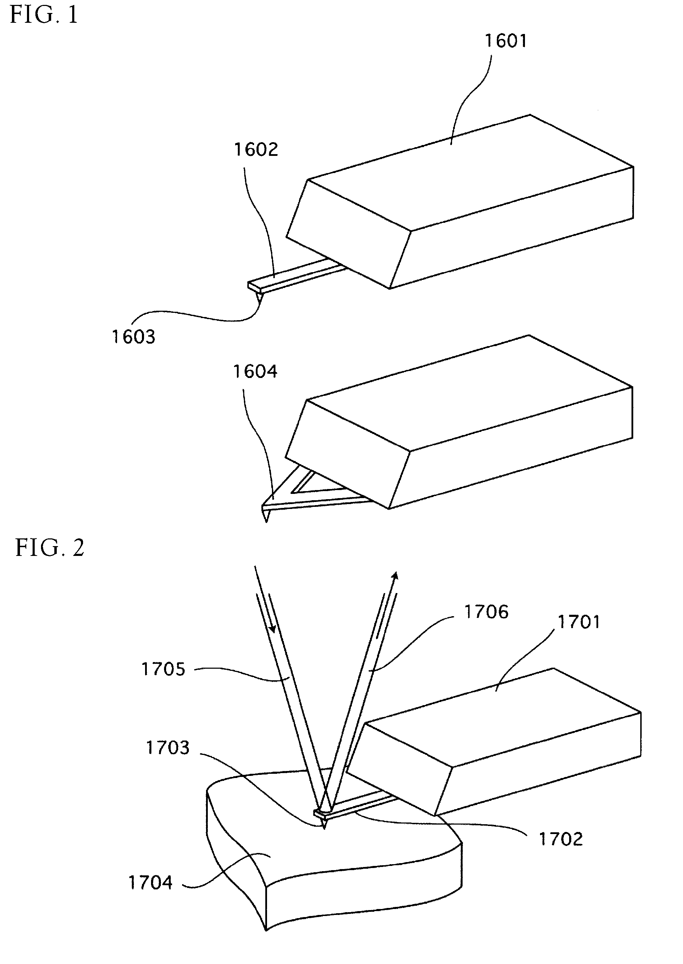

A structure of a probe for the conventional scanning probe microscope is shown in Fig.1.

As shown in this figure, the probe comprises a cantilever 1602 extending from a base 1601, and if necessary, a probe tip 1603 in the vicinity of the front edge of the cantilever 1602 suitable for the object under measurement or the measuring method. Material of the base 1601 is generally silicon, and the standard dimension is about 1.6mmx3.4mm. Material of the cantilever 1602 includes silicon, silicon nitride, these evaporated by metals, or many others, and its shape is of a triangular shape 1604 or of many others depending on the requirement. The length of the cantilever 1602 is typically from 100µm to several 100µm.

Figure 2 shows typically a way to use the probe in the scanning probe microscope.

As shown in this figure, a base 1701 is attached to a scanning apparatus (not shown) comprising a piezoelectric element, and a probe tip 1703 scans over a surface of an object under measurement 1704 to trace the shape of the surface. The scanning probe microscope is a microscope to detect a deformation of a cantilever 1702 induced by an interaction through the atomic force or the magnetic force and the like acting between the probe tip 1703 and the object under measurement 1704, and to visualize such as roughness or magnetization of the object under measurement 1704 by using a computer graphics technology. Detection of the deformation of the cantilever 1702 is usually made by an optical means.

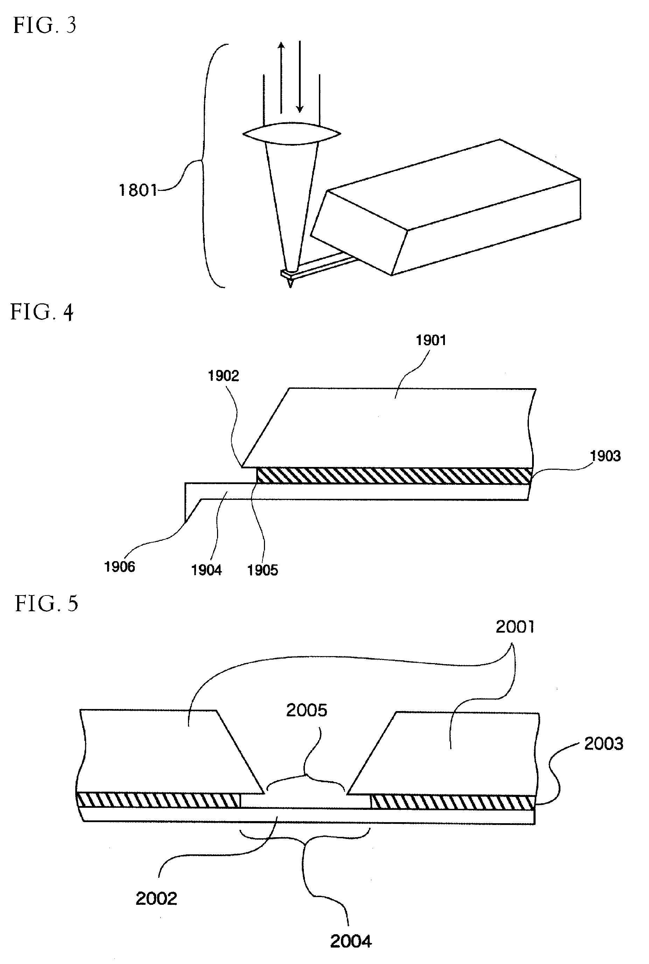

When an optical lever shown in Fig.2 is used as the optical means as described above, a laser ray 1705 is reflected by the rear face of the cantilever 1702, and an angle of the reflected ray 1706 is detected by a photodiode (not shown). Furthermore, when an optical interferometer is used as shown in Fig.3, the incident ray and the output one pass through an identical path 1801. In both cases, in order to prevent the reflected ray by the rear face from being interrupted by the edge of the base, the cantilever is protruding toward outside the base.

Figure 4 is a cross sectional view of the typical structure of the probe having a cantilever made from silicon.

In this figure, 1901 is a base, 1902 is a front edge of the base, 1903 is a buried oxide film, 1904 is a cantilever, 1905 is a front edge of the buried oxide film 1903, and 1906 is a probe tip

As shown in this figure, the typical structure of the probe having the cantilever made from silicon is a structure which uses a cantilever 1904 made by processing a silicon thin film of a SOI wafer, and a base 1901 made by processing the supporting substrate of the same SOI wafer. The cantilever 1904 is joined to the base 1901 through the buried oxide film 1903 inherent to the SOI wafer structure.

On the other hand, by detecting a change of the resonant frequency of the cantilever instead of the deformation of the cantilever, distance dependence of a force acting between a sample and the probe tip can be known. By this method the resolution of an atomic force microscope have improved up to a state to make it possible to distinguish individual atoms. Furthermore, this method can be utilized to know the mass of a molecule stuck to the cantilever. However, in order to detect smaller masses or forces by this method, a Q-factor of mechanical oscillation of the cantilever must be higher.

Because the technology to detect a force and/or a mass from the resonant frequency of such a mechanical oscillator can be applied to a sensor for a force and/or a mass in general, such a sensor and a probe microscope are technologically in close proximity with each other. The shape of the oscillator utilized in a sensor may be a doubly supported beam without protrusion from the base, or may be of a tuning fork shape.

Figure 5 is a cross sectional view showing a structure of an oscillator of a sensor applying a similar structure to the probe of the probe microscope made from silicon shown in Fig.4.

As shown in this figure, the typical structure of the oscillator of the sensor is a structure which uses a doubly supported beam 2002 made by processing a silicon thin film of a SOI wafer, and a base 2001 made by processing the supporting substrate of the same SOI wafer. The doubly supported beam 2002 is joined to the base 2001 through the buried oxide film 2003 inherent to the SOI wafer structure. The doubly supported beam 2002 is a structure expanding over an aperture of the base 2001, and therefore, observation of the doubly supported beam 2002 can be done from both sides. In addition, 2004 in Fig.5 is a real distance of the doubly supported beam 2002, and 2005 indicates a width of the aperture of the base 2001.

Present applicants have already proposed cantilevers with three dimensional micro structures in the following patent documents. [Patent Document 1]Japanese Patent Application 2004-058267, [Patent Document 2]Japanese Patent Application 2001-091441, [Patent Document 3]Japanese Patent Application 2001-289768 [Patent Document 4]Japanese Patent Application 2003-114182

### DISCLOSURE OF INVENTION

The structure of the conventional probe described above gives rise to following problems when an oscillator of a cantilever or sensor is miniaturized.

### [1]The first problem (related to the Claims 1 to 22 of the present invention)

Since a mechanical oscillator for use to detect a mass has a higher sensitivity when a mass of the mechanical oscillator itself is smaller, and a mechanical oscillator for use to detect a force has a higher sensitivity when the spring constant is smaller, a miniaturized mechanical oscillator is required in any case. In the conventional structure, however, due to the side etching while removing the buried oxide film present between the cantilever and the base, the real length of the cantilever becomes longer. For example, the real starting point of the cantilever 1904 in Fig.4 is not the front edge 1902 of the base but the front edge 1905 of the buried oxide film 1903. When the length of the cantilever 1904 is short, this difference can not be negligible.

### [2]The second problem (related to the Claims 23 to 26 of the present invention)

An oscillator of a sensor for a force and a mass has a similar problem as described in [1]. For example, the real length 2004 of the doubly supported beam 2002 in Fig.5 becomes longer than the aperture width 2005 of the base due to side etching during removing process of the buried oxide film 2003. When the length of the doubly supported beam is short, this difference can not be negligible.

### [3]The third problem (related to the Claims 11 to 20 of the present invention)

In the conventional fabrication method, it was necessary that a process to make a probe tip to the front edge of the cantilever of the scanning probe microscope is performed after the cantilever protrudes from the base, or the base is processed after the cantilever and the probe tip are fabricated. However, a processing the probe tip in the situation where the cantilever is protruding has a risk to give damage to the cantilever, and a processing the base after the probe tip is completed has a risk to give damage to the tip of the probe.

### [4]The fourth problem (related to a part of the Claims 1 to 11, and the Claim 27 to 33 of the present invention)

In the conventional fabrication method, the length of an oscillator of a cantilever or a sensor is dependent on the alignment accuracy of the mask aligner, and when the oscillator of the cantilever or the sensor is miniaturized, the alignment error of the mask aligner can not be neglected.

### [5]The fifth problem (related to the Claims 31 to 34 of the present invention)

In the case of an oscillator of a sensor used in combination with a laser Doppler interferometer, S/N ratio improves with higher resonant frequency of a doubly supported beam. To increase the resonant frequency of the doubly supported beam, there is a method to increase the thickness and decrease the length of the beam. When adopting this method to an extreme, the oscillation energy of the doubly supported beam is transmitted to the base, which results in a loss, thereby decreasing the mechanical Q-factor. In addition, as another method, the resonant frequency increases when applying tension to the doubly supported beam, but tension cannot be applied freely in the conventional technology.

By taking the situations described above into consideration, the present invention aims at providing a mechanical oscillator which defines the starting point of a cantilever at a front edge of a base and can determine the length of the cantilever without depending on an alignment accuracy and an etching amount, and providing a fabrication method of the mechanical oscillator.
To achieve the aim described above, the present invention provides:
[1] a mechanical oscillator fabricated by processing a wafer, comprising a cantilever having a starting point at a front edge of a base, the cantilever containing
   the base formed from a supporting substrate of a SOI wafer, and
   a structure to be a cantilever formed from a silicon thin film of the SOI wafer and protruding horizontally from the front edge of the base,
   wherein the cantilever is realized by steps of removing a part of a buried oxide film between the base and the structure to be a cantilever, and directly jointing the structure to be a cantilever to a part containing at least the front edge of the base where the buried oxide film is removed.
[2] the mechanical oscillator in the above description [1], wherein the cantilever is a probe of a scanning probe microscope.
[3] the mechanical oscillator in the above description [1] or [2], wherein the mechanical oscillator comprises a single of the cantilever.
[4] the mechanical oscillator in the above description [1] or [2], wherein the mechanical oscillator comprises a cantilever array containing a plurality of the cantilevers.
[5] the mechanical oscillator in the above description [4], wherein the cantilever array is configured on a line.
[6] the mechanical oscillator in the above description [4], wherein the cantilever array is configured on a circumference of a circle.
[7] a fabrication method of a mechanical oscillator fabricated by processing a wafer, characterized by forming steps of a cantilever having a starting point at a front edge of a base, the step containing:
   forming the base from a supporting substrate of a SOI wafer,
   removing a part of a buried oxide film fixed to the base,
   forming a structure to be a cantilever supported by the remaining buried oxide film,
   protruding in advance the front edge of the structure to be a cantilever from the front edge of the base, and
   directly jointing the structure to be a cantilever in the protruded position to a part containing at least the front edge of the base.
[8] the fabrication method of the mechanical oscillator in the above description [7], wherein a heat treatment is performed to strengthen the directly jointing.
[9] the fabrication method of the mechanical oscillator in the above description [7], wherein the direct joint between the structure to be a cantilever and the base is performed by surface tension of rinse water during drying process of the rinse water.
[10] the fabrication method of the mechanical oscillator in the above description [7], wherein the direct joint between the structure to be a cantilever and the base is performed by a liquid having strong surface tension inserted between the structure to be a cantilever and the base.
[11] a fabrication method of a mechanical oscillator fabricated by processing a wafer, characterized by forming steps of a cantilever having a starting point at a front edge of a base, the steps containing:
   forming the base from a supporting substrate of a SOI wafer,
   removing a part of a buried oxide film fixed to the base,
   forming a structure to be a cantilever supported by the remaining buried oxide film,
   processing the front edge of the structure to be a cantilever first in the situation before protruding from the base,
   protruding subsequently the front edge of the structure to be a cantilever from the front edge of the base by a movement means,
      and
   directly jointing the cantilever in the protruded position to a part containing at least the front edge of the base.
[12] the fabrication method of the mechanical oscillator in the above description [11], wherein a stopper is added to the movement means.
[13] the fabrication method of the mechanical oscillator in the above description [12], wherein the stopper is a stopper due to the surface tension.
[14] the fabrication method of the mechanical oscillator in the above description [11], wherein the direct joint between the structure to be a cantilever and the base is performed by surface tension of rinse water during drying process of the rinse water.
[15] the fabrication method of the mechanical oscillator in the above description [11], wherein the direct joint between the structure to be a cantilever and the base is performed by inserting a liquid having strong surface tension between the structure to be a cantilever and the base.
[16] the fabrication method of the mechanical oscillator in the above description [11] or [12], wherein the structure to be a cantilever is connected to a mechanism with flexibility in the horizontal direction formed from the same silicon thin film as this structure, and the movement means moves the structure to be a cantilever by an external force.
[17] the fabrication method of the mechanical oscillator in the above description [11] or [12], wherein the structure to be a cantilever is connected to a mechanism with flexibility in the horizontal direction formed from the same silicon thin film as this structure, and the movement means moves the structure to be a cantilever by a surface tension.
[18] the fabrication method of the mechanical oscillator in the above description [16], wherein the structure to be a cantilever is moved in the horizontal direction by a centrifugal force.
[19] the fabrication method of the mechanical oscillator in the above description [18], wherein the cantilever is arranged along a circumference of a circular plate substrate, and applying the centrifugal force is performed by rotating the substrate.
[20] the fabrication method of the mechanical oscillator in the above description [16], wherein the structure to be a cantilever is connected to a electrostatic micro actuator formed from the same silicon thin film as this structure, and the structure to be a cantilever is deformed in the horizontal direction by driving the electrostatic micro actuator.
[21] the mechanical oscillator in the above description [1] or [2], wherein the cantilever is of a thin wire with a triangular pillar shape consists of two silicon (111) planes and one silicon (100) plane, and the front edge of the cantilever is terminated by another silicon (111) plane.
[22] the fabrication method of the mechanical oscillator in the above description [21], characterized by:
   forming a thin wire with a triangular pillar shape consists of two silicon (111) planes and one silicon (100) plane by processing a silicon thin film of a SOI wafer,
   removing a part of a supporting substrate and a buried oxide film under the thin wire from the supporting substrate side,
   forming a silicon (111) plane to be a front edge of the cantilever by anisotropic etching of the thin wire by providing an etching solution from the removed side,
   moving then the cantilever to protrude from the supporting substrate and the removed part of the buried oxide film by a movement means,
      and
   sticking the cantilever to a base by the surface tension of the solution.
[23] a mechanical oscillator fabricated by processing a wafer, characterized by comprising a doubly supported beam having a starting point at a periphery of an aperture of a base, and containing:
   the base formed from a supporting substrate of a SOI wafer,
      and
   a structure to be a doubly supported beam formed from a silicon thin film of the SOI wafer and extending over the aperture of the base,
   wherein the doubly supported beam is realized by steps of removing a part of a buried oxide film between the base and the structure to be a doubly supported beam, and directly jointing a part of the structure to be a doubly supported beam to a part containing at least the front edge of the base.
[24] the mechanical oscillator in the above description [23], wherein the doubly supported beam is an oscillator of a sensor to measure a mass and/or a force.
[25] the mechanical oscillator in the above description [23] or [24], wherein the mechanical oscillator comprises a single of the doubly supported beam.
[26] the mechanical oscillator in the above description [23] or [24], wherein the mechanical oscillator comprises a doubly supported beam array containing a plurality of the doubly supported beams.
[27] a fabrication method of a mechanical oscillator fabricated by processing a wafer, characterized by forming steps of a doubly supported beam having a starting point at a periphery of an aperture of a base, the steps containing:
   forming the base from a supporting substrate of a SOI wafer,
   forming a structure to be a doubly supported beam formed from a silicon thin film of the SOI wafer and extending over the aperture of the base,
   removing a part of a buried oxide film between the base and the structure to be a doubly supported beam, and
   directly jointing a part of the structure to be a doubly supported beam to a part containing at least the front edge of the base.
[28] the fabrication method of the mechanical oscillator in the above description [27], wherein a heat treatment is performed to strengthen the directly jointing.
[29] the fabrication method of the mechanical oscillator in the above description [27], wherein the direct joint between the structure to be a doubly supported beam and the base is performed by surface tension of rinse water during drying process of the rinse water.
[30] the fabrication method of the mechanical oscillator in the above description [27], wherein the direct joint between the structure to be a doubly supported beam and the base is performed by inserting a liquid having strong surface tension between the structure to be a doubly supported beam and the base.
[31] the fabrication method of the mechanical oscillator in the above description [27], wherein the structure to be a doubly supported beam is jointed to the base while a tension being applied.
[32] the fabrication method of the mechanical oscillator in the above description [27], characterized in leaving a tension behind to the structure to be a doubly supported beam by applying an external expanding force.
[33] the fabrication method of the mechanical oscillator in the above description [27], wherein a tension is left behind to the structure to be a doubly supported beam by increasing the length of the structure to be a doubly supported beam temporarily by thermal expansion, and then returning back to the room temperature after jointing to the base.
[34] the mechanical oscillator in the above description [23], wherein the structure to be a doubly supported beam is of a triangular pillar shape consists of two silicon (111) planes and one silicon (100) plane.

### BRIEF DESCRIPTION OF THE DRAWINGS

Figure 1 shows a structure of a probe for the conventional scanning probe microscope.
Figure 2 shows a typical method to use a probe of a scanning probe microscope.
Figure 3 shows an example of a cantilever used in an optical interferometer.
Figure 4 shows a cross sectional view illustrating a typical structure of a probe with a cantilever made from silicon.
Figure 5 shows a cross sectional view illustrating a structure of an oscillator of a sensor made from silicon.
Figure 6 shows a cross sectional view illustrating a structure of a probe of a scanning probe microscope according to the first embodiment of the present invention.
Figure 7 shows a schematic plan view illustrating a cantilever array disposing a plurality of cantilevers on a line on a rectangular substrate according to the first embodiment of the present invention.
Figure 8 shows a schematic plan view illustrating a cantilever array disposing a plurality of cantilevers on a circumference of a substrate with a circular plate shape according to the first embodiment of the present invention.
Figure 9 shows a cross sectional view illustrating a fabrication procedure for processing a wafer for a probe of a scanning probe microscope according to the first embodiment of the present invention.
Figure 10 shows a schematic view illustrating a fabrication process of a probe of a scanning probe microscope according to the second embodiment of the present invention.
Figure 11 shows a schematic view illustrating a fabrication process of a probe with a stopper of a scanning probe microscope according to the second embodiment of the present invention.
Figure 12 shows a plan view seen from a cantilever side of a probe of a scanning probe microscope according to the third embodiment of the present invention.
Figure 13 shows a cross sectional view along a line A-A in Fig.12 (A).
Figure 14 shows a plan view seen from a cantilever side of a probe of a scanning probe microscope according to the fourth embodiment of the present invention.
Figure 15 shows a plan view seen from a cantilever side of a probe of a scanning probe microscope according to the fifth embodiment of the present invention.
Figure 16 shows a plan view seen from a cantilever side of a probe of a scanning probe microscope according to the sixth embodiment of the present invention.
Figure 17 shows a plan view seen from a cantilever side of a probe of a scanning probe microscope according to the seventh embodiment of the present invention.
Figure 18 shows a plan view seen from a cantilever side of a probe of a scanning probe microscope according to the eighth embodiment of the present invention.
Figure 19 shows a plan view seen from a cantilever side of a probe of a scanning probe microscope according to the ninth embodiment of the present invention.
Figure 20 shows a plan view illustrating a configuration of a cantilever array of a probe of a scanning probe microscope according to the tenth embodiment of the present invention.
Figure 21 shows a plan view seen from a cantilever side of a probe of a scanning probe microscope according to the eleventh embodiment of the present invention.
Figure 22 shows a structure of a probe of a scanning probe microscope according to the twelfth embodiment of the present invention.
Figure 23 shows a perspective view of a cantilever part of a probe of a scanning probe microscope according to the thirteenth embodiment of the present invention.
Figure 24 shows a fabrication process (Part one) of a probe of a scanning probe microscope according to the fourteenth embodiment of the present invention.
Figure 25 shows a fabrication process (Part two) of a probe of a scanning probe microscope according to the fourteenth embodiment of the present invention.
Figure 26 shows a fabrication process (Part three) of a probe of a scanning probe microscope according to the fourteenth embodiment of the present invention.
Figure 27 shows a fabrication process (Part four) of a probe of a scanning probe microscope according to the fourteenth embodiment of the present invention.
Figure 28 shows a cross sectional view of a doubly supported beam as a sensor according to the fifteenth embodiment of the present invention.
Figure 29 shows a cross sectional view of a fabrication process of a doubly supported beam as a sensor according to the sixteenth embodiment of the present invention.
Figure 30 shows a perspective view illustrating an example of a structure for applying tension to a doubly supported beam according to the seventeenth embodiment of the present invention.
Figure 31 shows a perspective view illustrating an example of a structure for applying tension to a doubly supported beam according to the eighteenth embodiment of the present invention.
Figure 32 shows a structure of a doubly supported beam according to the nineteenth embodiment of the present invention.

### BEST MODE FOR CARRYING OUT THE INVENTION

A mechanical oscillator fabricated by processing a wafer according to the present invention comprises a cantilever having a starting point at a front edge of a base, containing the base formed from a supporting substrate of a SOI wafer, and a structure to be a cantilever formed from a silicon thin film of the SOI wafer and protruding horizontally from the front edge of the base, wherein a part of a buried oxide film between the base and the structure to be a cantilever is removed, and the structure to be a cantilever is directly jointed to a part containing at least the front edge of the base where the buried oxide film is removed. Therefore, the mechanical oscillator can defines the starting point of a cantilever at the front edge of a base and can determine the length of the cantilever without depending on an alignment accuracy and an etching amount.

### EMBODIMENT

Embodiments according to the present invention are described in detail in the following.

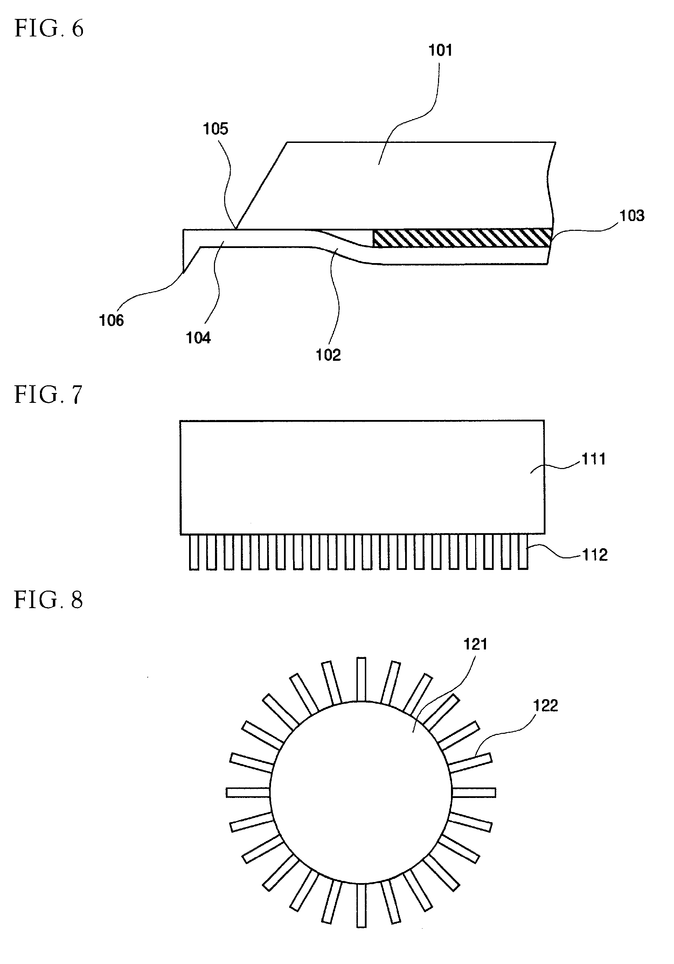

Figure 6 shows a cross sectional view illustrating a structure of a probe of a scanning probe microscope according to the first embodiment of the present invention (corresponding to the Claims 1 to 6 of the present invention).

In Fig.6, a base 101 and a structure to be a cantilever 102 are made from a supporting substrate and a silicon thin film, respectively, of a SOI wafer, between which initially presents a buried oxide film 103 inherent to the SOI wafer.

Here, the buried oxide film 103 is removed partly, and the structure to be a cantilever 102 is directly jointed to the base 101 to realize a cantilever 104. Therefore, the cantilever 104 has a starting point thereof at the jointing point between the base 101 and the front edge 105. In this example, a probe tip 106 is formed at the front edge of the cantilever 104.

In addition, although a single cantilever 104 is shown here, also in a case where a probe of a scanning probe microscope having a cantilever array containing a plurality of cantilevers is arranged, individual cantilever has the same structure as described above.

For example, as shown in Fig. 7, a cantilever array can be realized by disposing a plurality of cantilevers 112 in a direction of a line of a rectangular substrate 111 (corresponding to the claim 5 of the present invention), or as shown in Fig. 8, a cantilever array can be realized by disposing a plurality of cantilevers 122 on a circumference of a substrate 121 with a circular plate shape (corresponding to the claim 6 of the present invention).

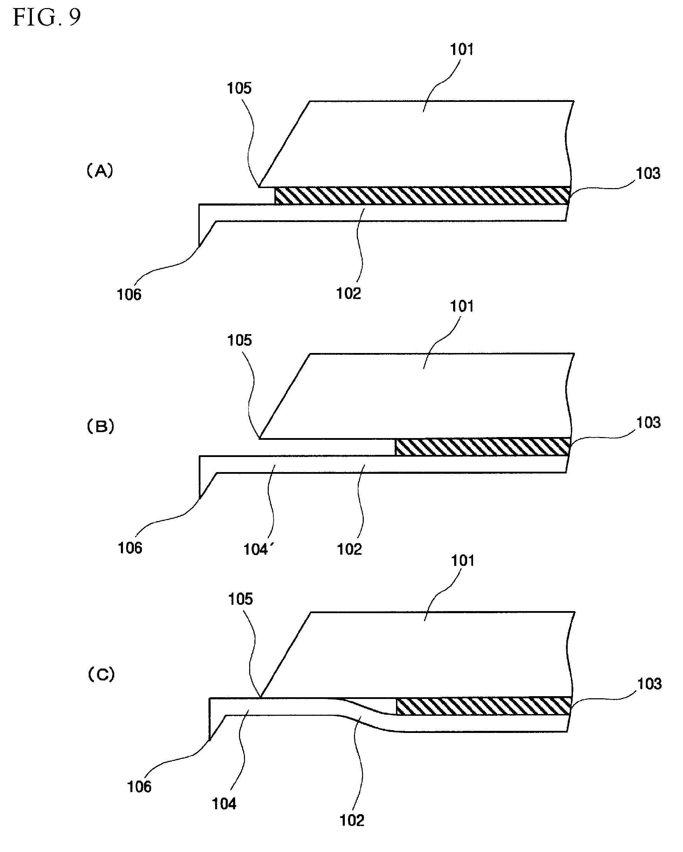

Figure 9 shows a cross sectional view illustrating a fabrication procedure for processing a wafer for a probe of a scanning probe microscope according to the first embodiment of the present invention (corresponding to the claim 7 of the present invention).

As shown in Fig. 9(A), a buried oxide film 103 inherent to the SOI wafer is initially present between the base 101 and a structure to be a cantilever 102. That is, the structure to be a cantilever 102 is jointed to the base 101 via the buried oxide film 103 inherent to the SOI wafer.

In the following, as shown in Fig. 9(B), by partially removing the buried oxide film 103 between the base 101 and the structure to be a cantilever 102, an overhung cantilever 104' is realized.

In the following, as shown in Fig. 9(C), a cantilever 104 is realized by direct joint of the overhung cantilever 104' to a part including at least the front edge 105 of the base 101 below which the buried oxide film 103 has been removed.

In the fabrication process of the probe of the first embodiment described above, for removing a part of the buried oxide film 103 between the structure to be a cantilever 102 and the base 101, a process including etching by hydrofluoric acid solution or the like, rinsing in water, and then drying is required. When the thickness of the realized cantilever 104' is thin enough, the cantilever 104' is stuck to the base 101 by the surface tension of the rinse water during the process of drying the rinse water, thereby the cantilever 104 according to the present invention being realized (corresponding to the claim 9 of the present invention). Performing heat treatment is preferable to increase the strength of the jointing between the cantilever 104 and the base 101, where it is preferable that the temperature is from 700°C to 1300°C, the most advantageously at 1100°C. In some cases, a treatment by an agent to activate the silicon surface may be added prior to the sticking of the cantilever 104' to the base 101.

In addition, although a single cantilever 104 is shown in the embodiment described above, also in a case where a probe of a scanning probe microscope has a cantilever array containing a plurality of cantilevers, individual cantilever can be fabricated in the same procedure as described above.

Moreover, although the sticking by the surface tension due to the rinse water is a phenomenon to be avoided in the micromachining technology, the present invention uses positively this phenomenon to stick the cantilever 104' to the base 101 (corresponding to the claim 9 of the present invention).

Besides the rinsing process, the direct joint may also be performed by inserting a liquid having strong surface tension between the structure to be a cantilever and the base (corresponding to the claim 10 of the present invention).

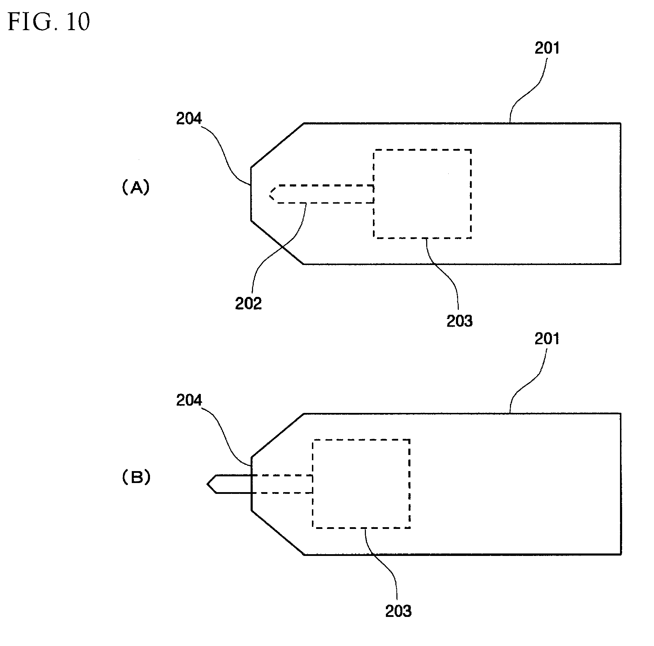

Figure 10 shows a schematic view illustrating a fabrication process of a probe of a scanning probe microscope according to the second embodiment of the present invention, and this figure is a schematic plan view seen from the cantilever side (corresponding to the claim 11 of the present invention).

As shown in Fig. 10 (A), a structure to be a cantilever 202 is processed first in the situation before protruding the structure to be a cantilever from a front edge 204 of a base 201. In some case, a probe tip is formed at the front edge of the structure to be a cantilever 202. The structure to be a cantilever 202 is connected to a movement means 203 to move horizontally the structure to be a cantilever. After removing a part of the buried oxide film, the movement means 203 move the structure to be a cantilever 202 toward the left hand side, and as shown in Fig.10 (B), the jointing to the base 201 is performed in the situation after protruding the structure to be a cantilever from the front edge 204 of the base. The positional relationship between the cantilever 202 and the movement means 203 is not limited to the positional relationship shown in Fig.10.

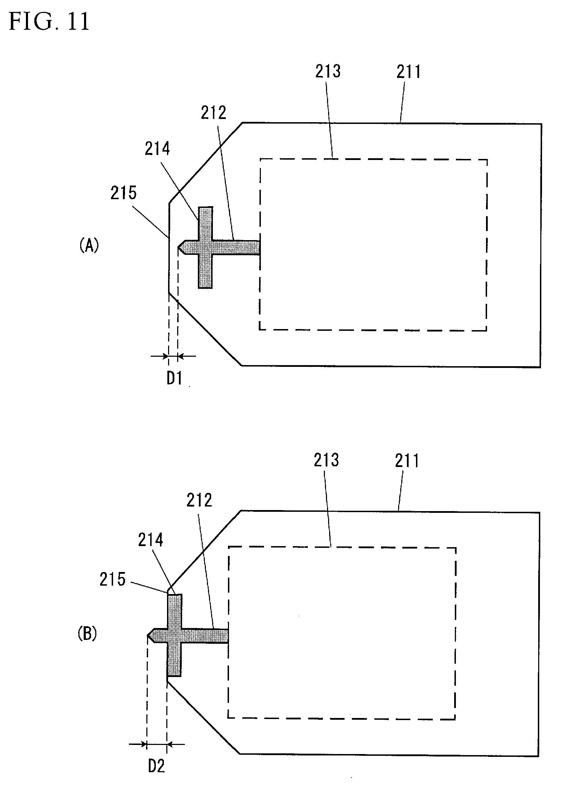

Figure 11 shows a schematic view illustrating a fabrication process of a probe with a stopper of a scanning probe microscope according to the second embodiment of the present invention, and the figure is a schematic plan view seen from the rear of the cantilever (corresponding to the claim 13 of the present invention).

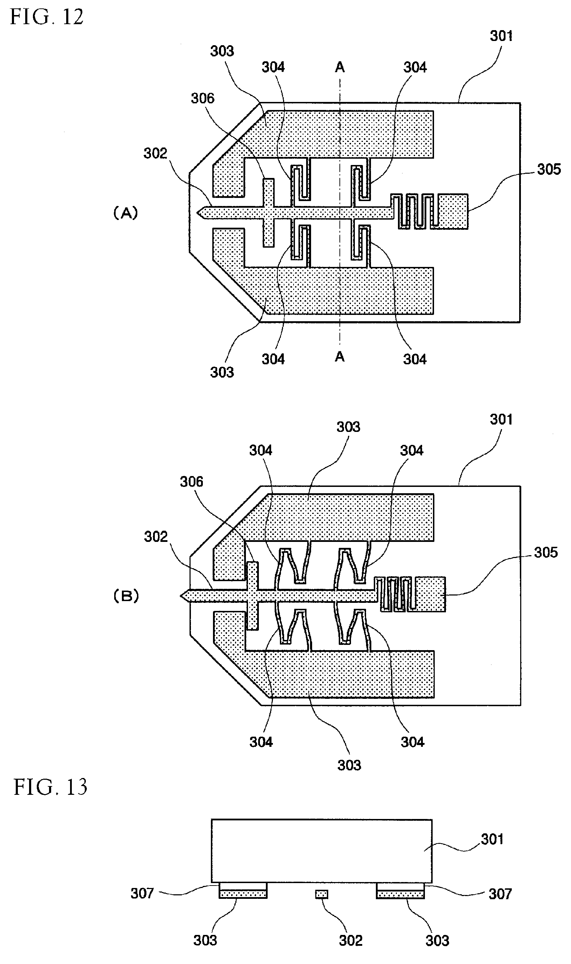

As shown in Fig. 11 (A), the structure to be a cantilever 212 is processed first in the situation before protruding the structure to be a cantilever from the front edge 215 of the base 211. In some case, a probe tip is formed at the front edge of the structure to be a cantilever 212. In this embodiment, a stopper extending perpendicularly to the movement axis made from a part of the silicon thin film is provided at the front edge of the structure to be a cantilever 212. This stopper is not one to be stopped by butting with the fixed part shown in Fig.12 described below, but designed to be stopped by the surface tension with the left hand side of the base. In addition, D₁ shown in Fig. 11(A) is an initial gap, which is a distance between the front edge of the structure to be a cantilever 212 and the front edge 215 of the base 211, and D₂ shown in Fig. 11(B) is a protruding distance of the front edge of the structure to be a cantilever 212 from the front edge 215 of the base 211. If a movable distance which a mechanism for movement 213 can generate is larger than D₁+D₂, the protruding distance can be kept constant even if the amount of the initial gap scatters. The structure to be a cantilever 212 is connected to the mechanism for movement 213 to move the structure to be a cantilever horizontally. After removing a part of the buried oxide film, the structure to be a cantilever 212 is moved toward the left hand side by the movement means 213, and, as shown in Fig.11(B), is jointed to the base 211 in the situation of being protruded from the front edge 215 of the base. Also, the positioning relationship between the cantilever 212 and the mechanism for movement 213 is not limited to the positioning relationship shown in Fig.11.

Figure 12 shows a plan view seen from a cantilever side of a probe of a scanning probe microscope according to the third embodiment of the present invention. Figure 12(A) is a view before movement of the cantilever, and Figure 12(B) is after movement of the cantilever. Figure 13 shows a cross sectional view along a line A-A in Fig.12 (A) (corresponding to the claim 16 of the present invention).

In Fig.12, all parts having the reference numbers except a base 301 are made from a silicon thin film of a SOI wafer. A structure to be a cantilever 302 is connected to a fixed part 303 through flexible supporting beams 304.

In some cases a probe tip is formed at the front edge of the structure to be a cantilever 302. A buried oxide film 307 remains (as shown in Fig.13) between the fixed part 303 and the base 301, but the buried oxide film in other parts is removed.

When a force toward the left hand side is applied to an external force applying part 305 by an external manual prober or the like, the structure to be a cantilever 302 is displaced toward the left hand side, and the front edge of the structure to be a cantilever 302 protrudes from the front edge of the base 301 (corresponding to the claim 16 of the present invention).

By performing the movement for the individual cantilever while measuring the protruding distance using an optical microscope, the length of the cantilever can be determined with an accuracy of 0.2µm.

Also by providing a stopper 306 made from the same silicon thin film as the structure to be a cantilever 302, and by contacting the stopper 306 to the fixed part 303, the protruding distance can be determined not by the strength of the external force itself, but by the initial distance between the stopper 306 and the fixed part 303 (corresponding to the claim 12 of the present invention).

Figure 12(B) shows the situation where the movement distance of the structure to be a cantilever 302 is limited by the stopper 306.
The positioning relationship between the structure to be a cantilever 302 and the external force applying part 305 is not limited to the positioning relationship shown in Fig.12.

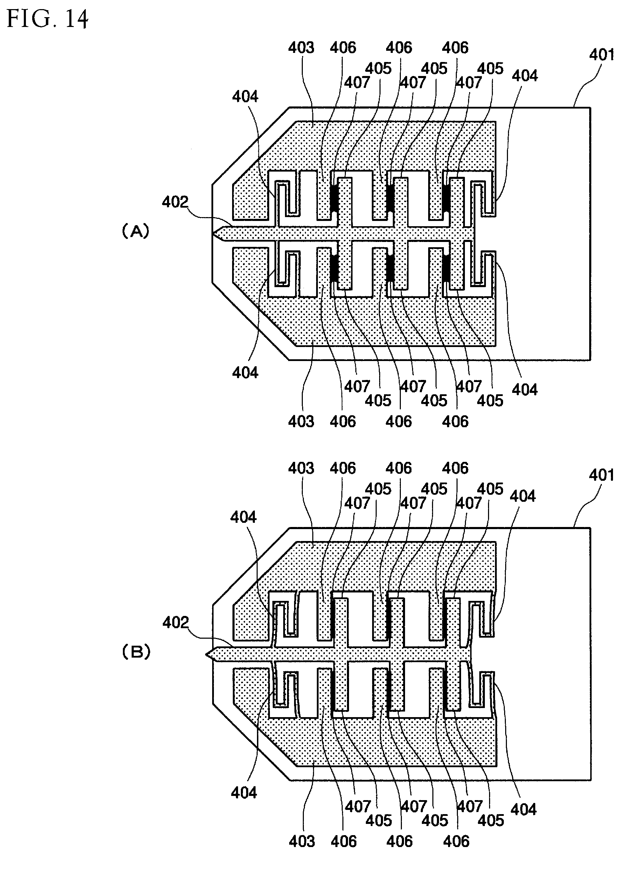

Figure 14 shows a plan view seen from a cantilever side of a probe of a scanning probe microscope according to the fourth embodiment of the present invention. Figure 14(A) is a view before movement of the cantilever, and Figure 14(B) is after movement of the cantilever (corresponding to the claim 17 of the present invention).

In these figures, all parts having the reference numbers except a base 401 and liquid droplets 407 are made from a silicon thin film of a SOI wafer. A structure to be a cantilever 402 is connected to a fixed part 403 through flexible supporting beams 404. In some cases a probe tip is formed at the front edge of the structure to be a cantilever 402. A buried oxide film (not shown) remains between the fixed part 403 and the base 401, but the buried oxide film in other parts is removed. Protrusions 405 are provided to the structure to be a cantilever 402. On the other hand, also on the fixed part 403 protrusions 406 are provided which are facing with and horizontally in front of the protrusions 405. After wetting the probe by liquid such as water, and then removing the liquid gradually by evaporation or other method, due to the surface tension of the liquid droplet 407 remaining between the protrusions 405 and the protrusions 406, as shown in Fig. 14(B), the front edge of the structure to be a cantilever 402 is displaced and protruded from the front edge of the base 401, and then jointed to the base 401.

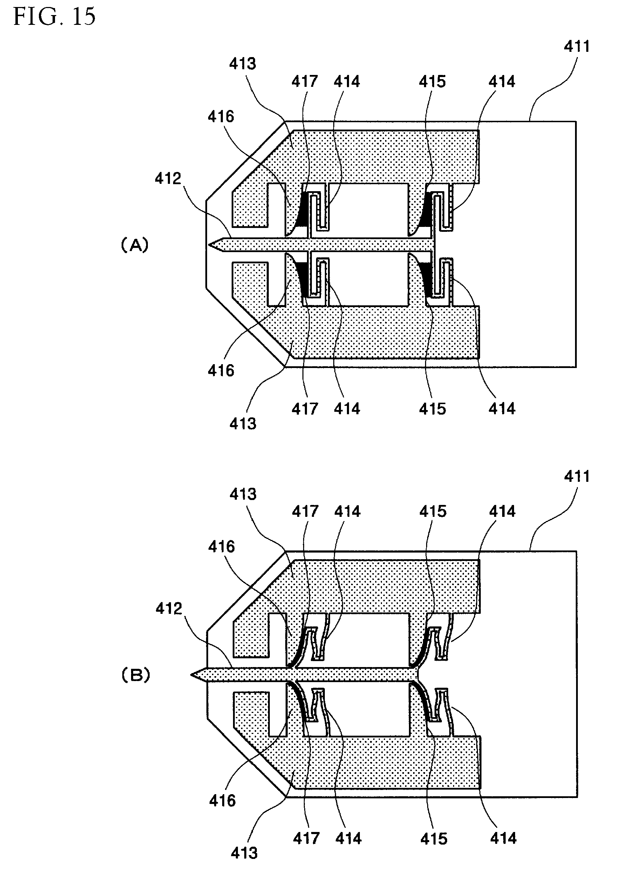

Figure 15 shows a plan view seen from a cantilever side of a probe of a scanning probe microscope according to the fifth embodiment of the present invention. Figure 15(A) is a view before movement of the cantilever, and Figure 15(B) is a view after movement of the cantilever (corresponding to the claim 17 of the present invention).

In these figures, all parts having the reference numbers except a base 411 and liquid droplets 417 are made from a silicon thin film of a SOI wafer. A structure to be a cantilever 412 is connected to a fixed part 413 through flexible supporting beams 414. In some cases a probe tip is formed at the front edge of the structure to be a cantilever 412. A buried oxide film (not shown) remains between the fixed part 413 and the base 411, but the buried oxide film in other parts is removed. On the fixed part 413, protrusions 416 with curved surface 415 are provided facing to the supporting beam 414.

After wetting the probe by liquid such as water, and then removing the liquid gradually by evaporation or other method, due to the surface tension of the liquid droplet 417 remaining between the protrusion 416 and the supporting beam 414, as shown in Fig. 15 (B), the front edge of the structure to be a cantilever 412 is displaced and protruded from the front edge of the base 411, and then jointed to the base 411.

Because the curved surface 415 is formed on the protrusion 416, due to the liquid droplet 417 adherent to the protrusion 416, the structure to be a cantilever 412 can be smoothly displaced forward along the curved surface 415 of the protrusion 416.

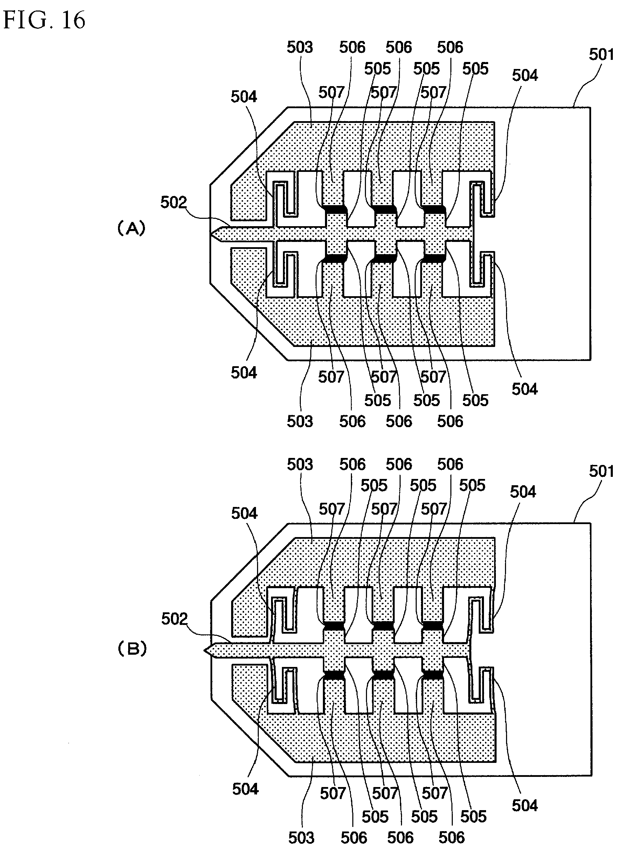

Figure 16 shows a plan view seen from a cantilever side of a probe of a scanning probe microscope according to the sixth embodiment of the present invention. Figure 16(A) is a view before movement of the cantilever, and Figure 16(B) is a view after movement of the cantilever (corresponding to the claim 17 of the present invention).

In these figures, all parts having the reference numbers except a base 501 and liquid droplets 507 are made from a silicon thin film of a SOI wafer. A structure to be a cantilever 502 is connected to a fixed part 503 through flexible supporting beams 504. In some cases a probe tip is formed at the front edge of the structure to be a cantilever 502. A buried oxide film (not shown) remains between the fixed part 503 and the base 501, but the buried oxide film in other parts is removed. Protrusions 505 are provided to the structure to be a cantilever 502. On the other hand, also on the fixed part 503, protrusions 506 are provided which are facing with the protrusions 505 in the up and down direction and displaced by a slight distance in the direction of movement of the structure to be a cantilever 502. After wetting the probe by liquid such as water, and then removing the liquid gradually by evaporation or other method, due to the surface tension of the liquid droplet 507 remaining between the protrusions 505 and the protrusions 506, as shown in Fig.16 (B), the front edge of the structure to be a cantilever 502 is displaced and protruded from the front edge of the base 501, and then jointed to the base 501.

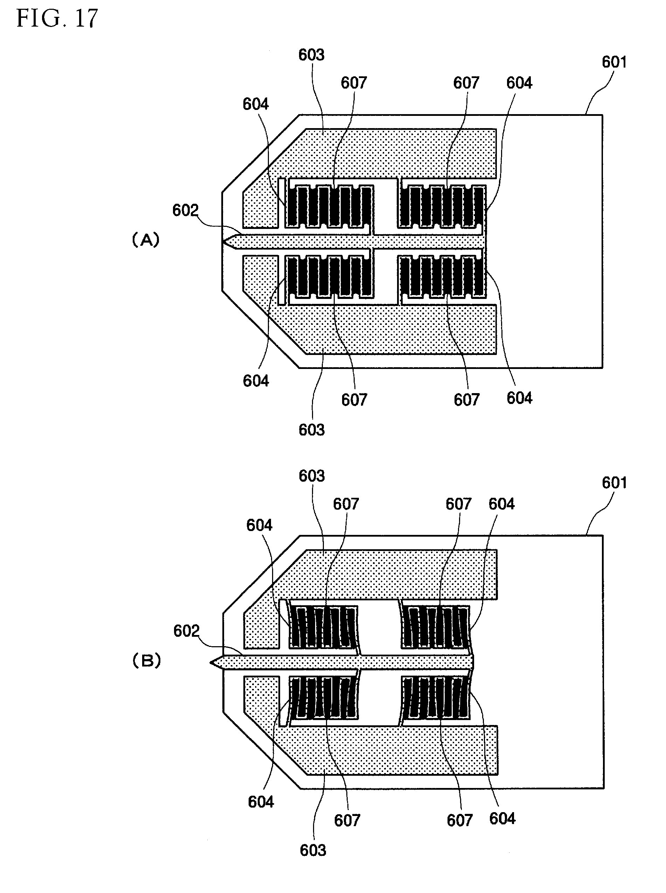

Figure 17 shows a plan view seen from a cantilever side of a probe of a scanning probe microscope according to the seventh embodiment of the present invention. Figure 17(A) is a view before movement of the cantilever, and Figure 17(B) is a view after movement of the cantilever (corresponding to the claim 17 of the present invention).

In these figures, all parts having the reference numbers except a base 601 and liquid droplets 607 are made from a silicon thin film of a SOI wafer. A structure to be a cantilever 602 is connected to a fixed part 603 through flexible supporting beams 604. In some cases a probe tip is formed at the front edge of the structure to be a cantilever 602. A buried oxide film (not shown) remains between the fixed part 603 and the base 601, but the buried oxide film in other parts is removed. After wetting the probe by liquid such as water, and then removing the liquid gradually by evaporation or other method, due to the surface tension of the liquid droplet 607 remaining in gaps between the folds of the supporting beam 604 with flexible bellows, as shown in Fig.17(B), the front edge of the structure to be a cantilever 602 is displaced and protruded from the front edge of the base 601, and then jointed to the base 601.

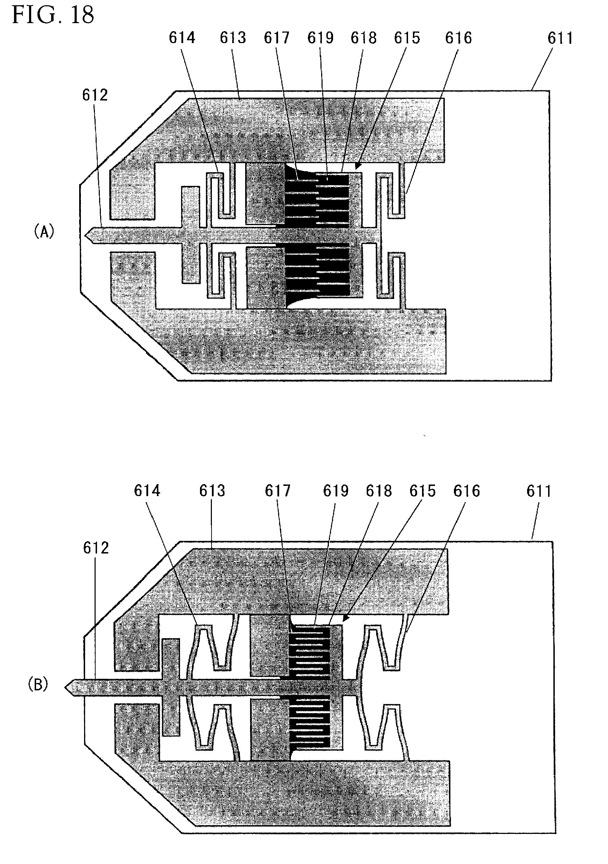

Figure 18 shows a plan view seen from a cantilever side of a probe of a scanning probe microscope according to the eighth embodiment of the present invention. Figure 18(A) is a view before movement of the cantilever, and Figure 18(B) is a view after movement of the cantilever (corresponding to the claim 17 of the present invention).

In these figures, all parts having the reference numbers except a base 611 and liquid droplets 619 are made from a silicon thin film of a SOI wafer. On the front side and the rear side of a structure to be a cantilever 612, flexible supporting beams 614,616, respectively, are formed. Between these supporting beams 614 and 616, a first comb-tooth shaped member 617 and a second comb-tooth shaped member 618 are formed on the fixed part side and on the side of the structure to be a cantilever, respectively, which are configured as an interdigital com-tooth shaped device 615. In other words, the first comb-tooth shaped member 617 on the fixed part 613 and the second comb-tooth shaped member 618 on the side of the structure to be a cantilever 612 are arranged so as to face and join with each other alternately. In some cases a probe tip is formed at the front edge of the structure to be a cantilever 612. A buried oxide film (not shown) remains between the fixed part 613 and the base 611, but the buried oxide film in other parts is removed. After wetting the probe by liquid 619 such as water, and then removing the liquid 619 gradually by evaporation or other method, due to the surface tension of the liquid droplet remaining in gaps of the flexible comb-tooth shaped mechanism 615, as shown in Fig.18 (B), the front edge of the structure to be a cantilever 612 is displaced and protruded from the front edge of the base 611, and then jointed to the base 611.

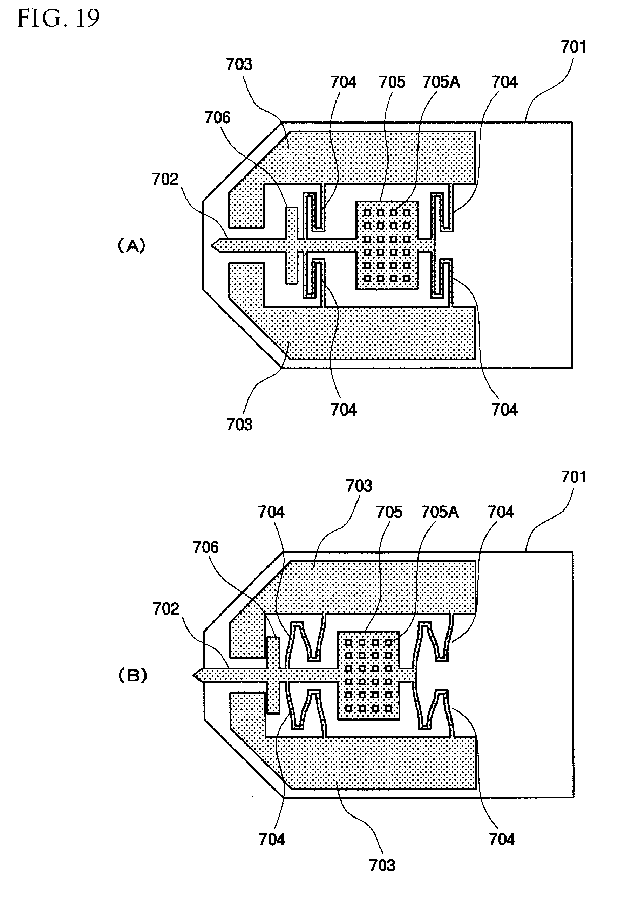

Figure 19 shows a plan view seen from a cantilever side of a probe of a scanning probe microscope according to the ninth embodiment of the present invention. Figure 19(A) is a view before movement of the cantilever, and Figure 19(B) is a view after movement of the cantilever (corresponding to the claim 18 of the present invention).

In these figures, all parts having the reference numbers except a base 701 are made from a silicon thin film of a SOI wafer. A structure to be a cantilever 702 is connected to a fixed part 703 through flexible supporting beams 704. In some cases a probe tip is formed at the front edge of the structure to be a cantilever 702. A buried oxide film (not shown) remains between the fixed part 703 and the base 701, but the buried oxide film in other parts is removed. Holes 705A on a weight (body of inertia: mass) 705 are for reducing the etching time to remove the buried oxide film, and is not always necessary to be provided.

By a method such as setting the probe into a rotating jig(not shown), a centrifugal force toward the left hand side is applied to the probe shown in Fig.19(A). Due to the force acting on the weight 705, as shown in Fig. 19(B), the structure to be a cantilever 702 is moved toward the left hand side, and the front edge thereof protrudes from the front edge of the base 701. It should be mentioned that the positioning relationship between the structure to be a cantilever 702 and the weight 705 is not limited to the positioning relationship shown in Fig.19.

As described above, the protruding distance of the cantilever can be adjusted by the strength of the centrifugal force. In addition, by providing a stopper 706 made from the same silicon thin film as the structure to be a cantilever 702, and by contacting the stopper with the fixed part 703, the protruding distance of the cantilever can be determined by the initial distance between the stopper 706 and the fixed part 703, not by the strength of the external force itself. Figure 19(B) shows a situation where the movement distance is limited by the stopper 706.

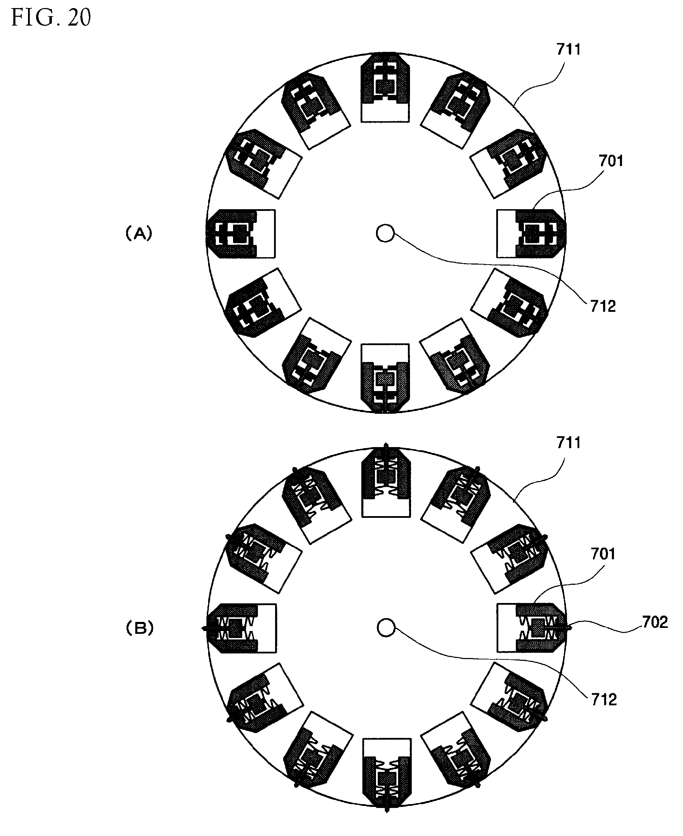

Figure 20 shows a plan view illustrating a configuration of a cantilever array of a probe of a scanning probe microscope according to the tenth embodiment of the present invention (corresponding to the claim 19 of the present invention).

In this embodiment, as shown In Fig.20(A), a circular plate 711 has a rotation axis 712 at the center, and structures to be cantilevers 702 having the base 701 and the weight 705 same as shown in Fig.19 are formed on a circumference of the circular plate 711.

Then as shown in Fig.20(B), by driving the rotation axis 712, the structures to be cantilevers 702 are protruded simultaneously from the circumference of the circular plate 711 and then to be fixed.

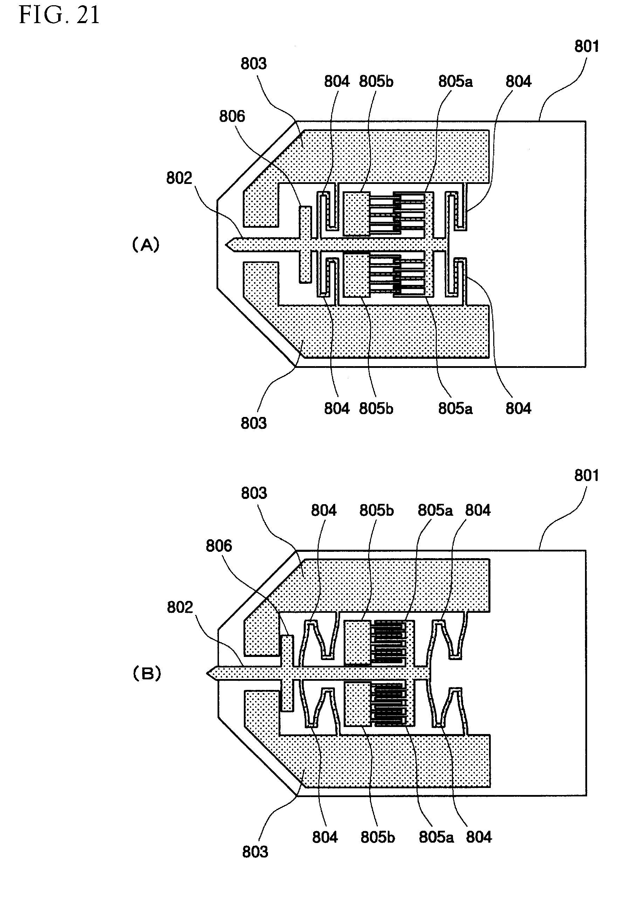

Figure 21 shows a plan view seen from a cantilever side of a probe of a scanning probe microscope according to the eleventh embodiment of the present invention. Figure 21(A) is a view before movement of the cantilever, and Figure 21(B) is a view after movement of the cantilever (corresponding to the claim 20 of the present invention).

In these figures, all parts having the reference numbers except a base 801 are made from a silicon thin film of a SOI wafer. A structure to be a cantilever 802 is connected to a fixed part 803 through flexible supporting beams 804. In some cases a probe tip is formed at the front edge of the structure to be a cantilever 802. A buried oxide film (not shown) remains between the fixed part 803 and the base 801, and between a fixed electrode 805b of an electrostatic actuator described below and the base 801, but the buried oxide film in other parts is removed. The structure to be a cantilever 802 is connected to a movable electrode 805a of the electrostatic actuator which the fixed electrode 805b is configured to face.

By applying a voltage between the movable electrode 805a and the fixed electrode 805b of the electrostatic actuator, a force toward the left hand side is applied to the movable electrode 805a, the structure to be a cantilever 802 moves toward the left hand side, and as shown in Fig.21(B), the front edge thereof protrudes from the front edge of the base 801. The movement by the electrostatic actuator can be preformed in air, in vacuum, or in insulating liquid.

By moving the individual cantilever while measuring the protruding distance by using an optical microscope, the length of the cantilever can be determined with an accuracy of 0.2µm.

In addition, by providing a stopper 806 made from the same silicon thin film as the structure to be a cantilever 802, and by contacting the stopper 806 with the fixed part 803, the protruding distance of the cantilever can be determined by the initial distance between the stopper 806 and the fixed part 803, not by the voltage applied between the electrodes 805a and 805b of the electrostatic actuator. Figure 21(B) shows a situation where the movement distance is limited by the stopper 806.

It is to be mentioned that although an electrostatic actuator with a comb tooth is shown here, other types of the electrostatic actuator can also be used.

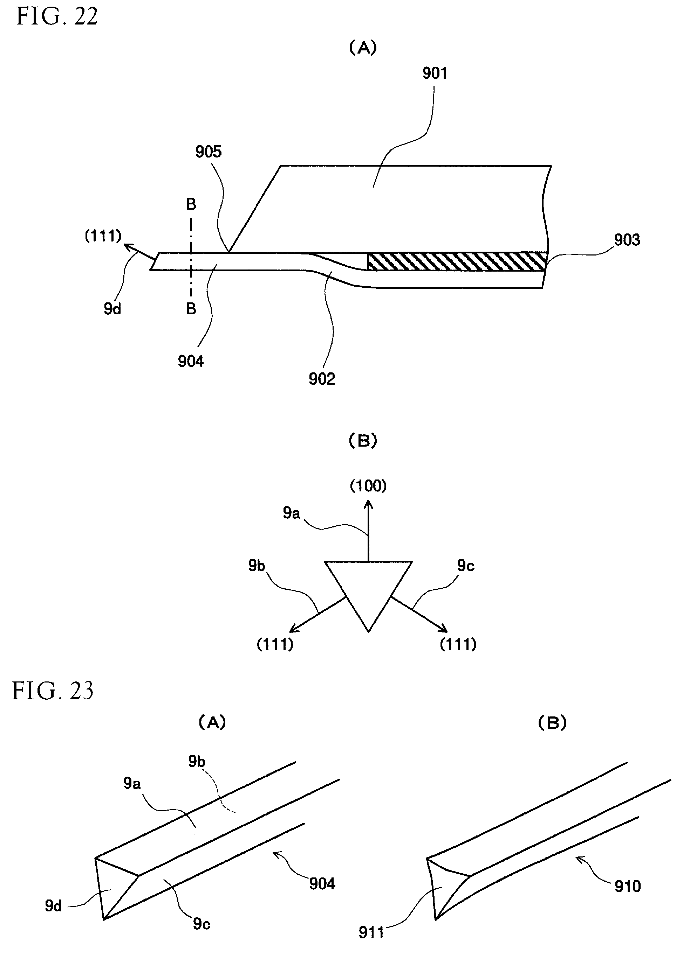

Figure 22 shows a structure of a probe of a scanning probe microscope according to the twelfth embodiment of the present invention. Figure 22(A) shows a side cross sectional view of the cantilever of the probe, and Figure 22(B) shows a cross sectional view along a line B-B of Fig.22(A) (corresponding to the claim 21 of the present invention).

In these figures, between a structure to be a cantilever 902 made from a silicon thin film of a SOI wafer and a base 901 made from a supporting substrate of the same SOI wafer, a buried oxide film 903 remains in a part, but in another part the buried oxide film is removed, where the structure to be a cantilever 902 is directly jointed to the base 901 to become a cantilever 904. Moreover, 905 is a starting point of the cantilever jointed to the front edge of the base 901.

The cantilever 904 has a triangular pillar shape composed of a silicon (100) plane (a plane 9a of Fig. 22(B)). and two silicon (111) planes (planes 9b and 9c of Fig.22(B)).Such a structure can be realized by utilizing an anisotropic etching in an aqueous solution such as potassium hydroxide to a SOI wafer having a silicon (100) surface plane as a starting material. The front edge of the cantilever 904 has a silicon (111) plane (a plane 9d of Fig.22(A)).

In such a structure the silicon (111) planes of the cantilever of the mechanical oscillator have reduced surface roughness because these planes appear due to very slow etching speed, and the silicon (100) plane is a very smoothly finished plane of the silicon thin film of the SOI wafer, and as a result the surface roughness of the cantilever is suppressed to a low level. In a miniaturized cantilever, the surface roughness is a primary origin of decreasing the Q-factor of the mechanical oscillation, therefore the cantilever of this probe has a high Q-factor. As a result, the resonant frequency changes steeply as a function of a force, thereby realizing a scanning probe microscope with high detection sensitivity to a force.

Figure 23 shows a perspective view of a cantilever part of a probe of a scanning probe microscope according to the thirteenth embodiment of the present invention (corresponding to the claim 21 of the present invention).

The triangular pillar shaped cantilever 904 formed in Fig.22 and having the planes 9a, 9b, 9c and 9d as shown in Fig.23(A) is thermally oxidized at relatively low temperature such as 950°C and then the oxidized part is removed by hydrofluoric acid. Then the cusp of the triangular pillar shape is sharpened more to become a shape shown in Fig.23(B). This front edge of the cantilever 910 can be utilized as a probe tip 911.

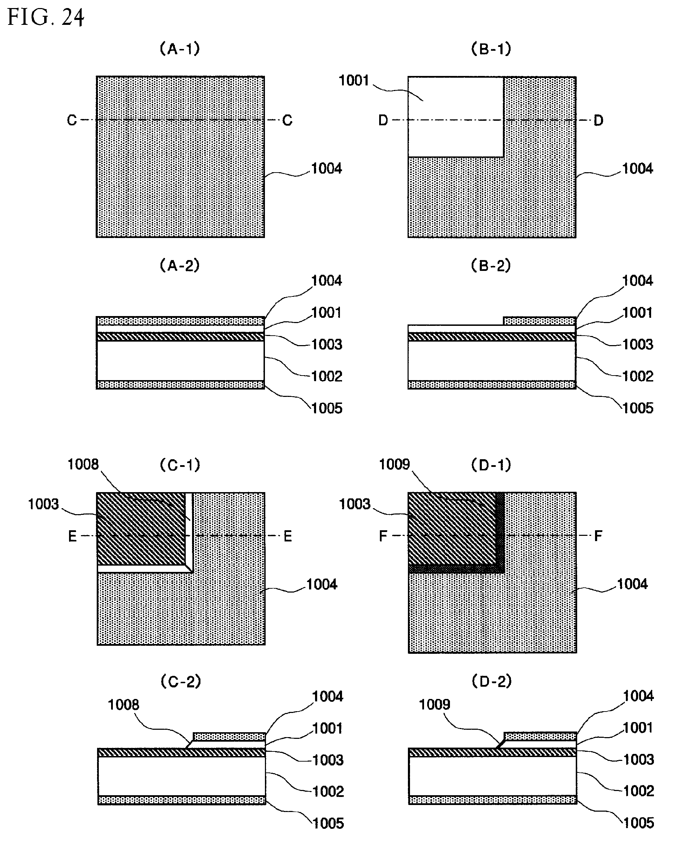

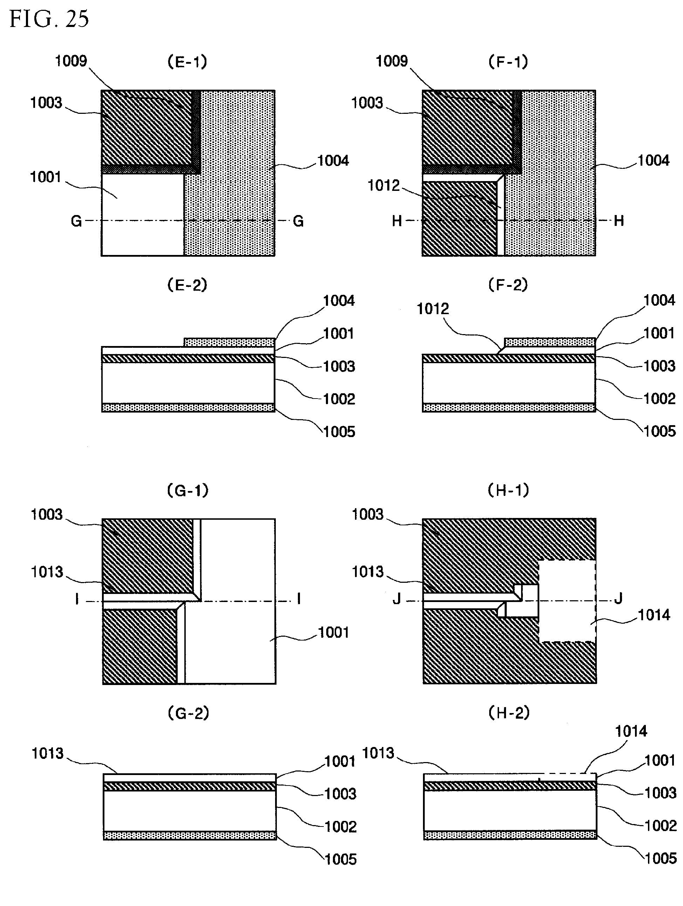

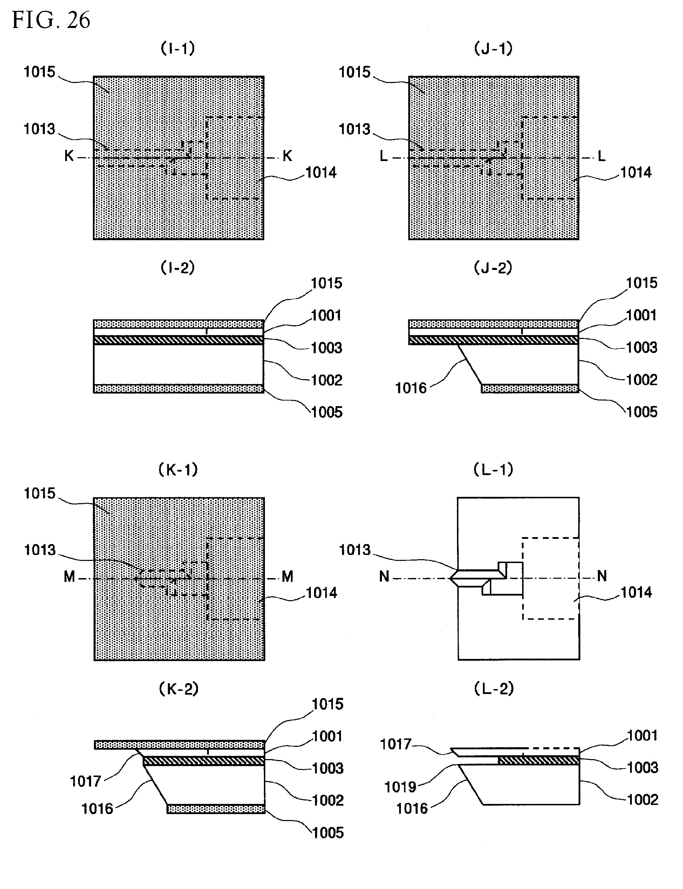

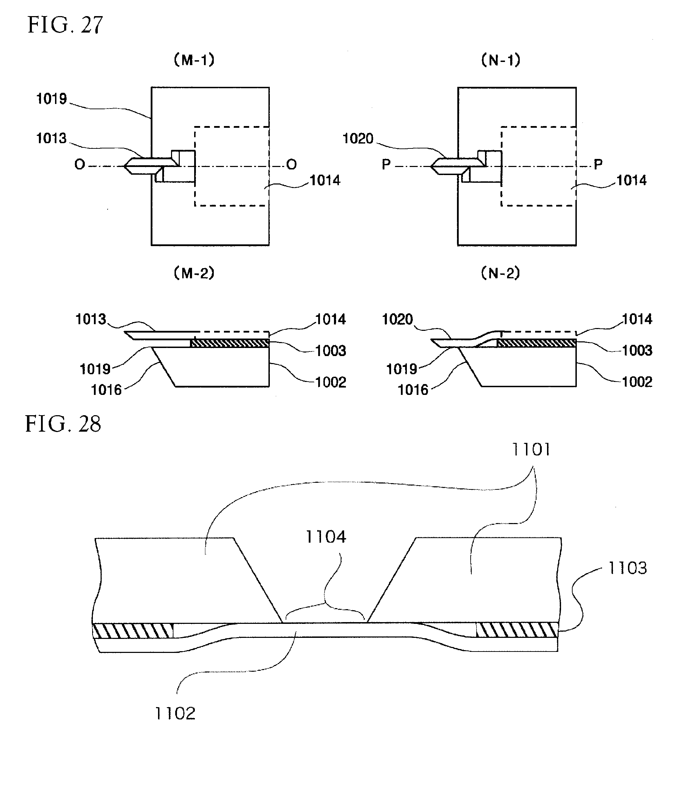

Figure 24 shows a fabrication process (Part one) of a probe of a scanning probe microscope according to the fourteenth embodiment of the present invention. Figure 25 shows a fabrication process (Part two) of the probe of the scanning probe microscope. Figure 26 shows a fabrication process (Part three) of the probe of the scanning probe microscope. Figure 27 shows a fabrication process (Part four) of the probe of the scanning probe microscope (corresponding to the claim 22 of the present invention).
[1] First of all, silicon nitride films 1004, 1005 are formed on both faces of a SOI wafer. Figure 24(A-1) is a plan view seen from the thin film of the SOI, and figure 24(A-2) is a cross sectional view along a line C-C in Fig. 24(A-1). The silicon thin film 1001 has a (100) plane as the surface. Here, 1001 is a silicon thin film, 1002 is a supporting substrate, 1003 is a buried oxide film.
[2] In the following, a part of the silicon nitride film 1004 on the silicon thin film 1001 side is removed. Figure 24(B-1) is a plan view from the thin film side of the SOI in this situation, and figure 24(B-2) is a cross sectional view along a line D-D in Fig.24(B-1). The pattern to remove the silicon nitride film 1004 is aligned to be parallel to a (111) plane of the silicon thin film 1001.
[3] Next, by performing an anisotropic etching in an aqueous solution such as potassium hydroxide, the silicon thin film 1001 is removed in a part where the silicon nitride film 1004 has been removed, and an oblique plane 1008 constituted of a silicon (111) plane remains. Figure 24(C-1) is a plan view from the thin film side of the SOI in this situation, and figure 24(C-2) is a cross sectional view along a line E-E in Fig.24(C-1).
[4] In the following, a thermal oxidization of the oblique plane 1008 is performed. Figure 24(D-1) is a plan view from the thin film side of the SOI in this situation, and figure 24(D-2) is a cross sectional view along a line F-F in Fig.24(D-1). 1009 indicate a thermally oxidized part.
[5] Next, a part of the remaining silicon nitride film 1004 on the silicon thin film 1001 is removed. Figure 25(E-1) is a plan view from the thin film side of the SOI in this situation, and figure 25(E-2) is a cross sectional view along a line G-G in Fig.25(E-1). The pattern to remove the silicon nitride film 1004 is aligned to be parallel to a (111) plane of the silicon thin film 1001.
[6] In the following, by performing an anisotropic etching in an aqueous solution such as potassium hydroxide, the silicon thin film 1001 is removed in a part where the silicon nitride film 1004 has been removed, and an oblique plane 1012 constituted of a silicon (111) plane remains. Figure 25(F-1) is a plan view from the thin film side of the SOI in this situation, and figure 25(F-2) is a cross sectional view along a line H-H in Fig.25(F-1).
[7] Next, by removing all of the silicon nitride film 1004 and the thermal oxide film 1009 on the silicon thin film 1001, a thin wire with triangular cross section 1013 surrounded by a silicon (100) plane and two silicon (111) planes is completed. Figure 25(G-1) is a plan view from the thin film side of the SOI in this situation, and figure 25(G-2) is a cross sectional view along a line I-I in Fig.25(G-1).
[8] In the following, a structure to be a movement means 1014 is fabricated by processing the silicon thin film 1001. Figure 25(H-1) is a plan view from the thin film side of the SOI in this situation, and figure 25(H-2) is a cross sectional view along a line J-J in Fig.25(H-1).Particular examples of the movement means 1014 are embodiments according to Claim 16 to 20.
[9] Next, all surfaces on the silicon thin film 1001 side are covered by a silicon nitride film 1015. Figure 26(I-1) is a plan view from the thin film side of the SOI in this situation, and figure 26(I-2) is a cross sectional view along a line K-K in Fig.26(I-1). Furthermore, an oxide film may also be used instead of the silicon nitride film 1015.
[10] In the following, a part of the silicon nitride film 1005 on the supporting substrate 1002 side is removed, and an anisotropic etching is performed by using an aqueous solution such as potassium hydroxide. Figure 26(J-1) is a plan view from the thin film side of the SOI in this situation, and figure 26(J-2) is a cross sectional view along a line L-L in Fig.26(J-1). As a result of the anisotropic etching, the supporting substrate 1002 is removed in a part where the silicon nitride film 1005 was removed, and an oblique plane 1016 constituted of a silicon (111) plane is formed.
[11] Next, by removing the buried oxide film 1003 remaining in the part where the supporting substrate 1002 was removed, and subsequently by performing an anisotropic etching on the thin wire with triangular cross section 1013 in an aqueous solution such as potassium hydroxide, a silicon (111) plane 1017 is formed at the front edge thereof. Figure 26(K-1) is a plan view from the thin film side of the SOI in this situation, and figure 26(K-2) is a cross sectional view along a line M-M in Fig.26(K-1).
[12] In the following, every silicon nitride films 1005 and 1015 are removed. Furthermore, a part of the buried oxide film 1003 under the thin wire with triangular cross section 1013 is removed. Figure 26(L-1) is a plan view from the thin film side of the SOI in this situation, and figure 26(L-2) is a cross sectional view along a line N-N in Fig.26(L-1). In the following, the base is formed by processing the supporting substrate 1002, although the description of the process is omitted. The process may also be inserted in other part of the fabrication process described here of the cantilever.
[13] Next, the thin wire with triangular cross section 1013 is moved toward the left hand side by using the movement means 1014, and the front edge thereof is protruded from the front edge 1019 of the supporting substrate (which is also the front edge of the base of the probe.). Figure 27(M-1) is a plan view from the thin film side of the SOI in this situation, and figure 27(M-2) is a cross sectional view along a line O-O in Fig.27(M-1).
[14] Finally, by deforming the thin wire with triangular cross section 1013 and directly jointing to the supporting substrate 1002 (the base of the probe), the cantilever 1020 is completed. Figure 27(N-1) is a plan view from the thin film side of the SOI in this situation, and figure 27(N-2) is a cross sectional view along a line P-P in Fig.27(N-1). The direct joint here can be performed by using the surface tension of liquid.

Figure 28 shows a cross sectional view of a doubly supported beam as a sensor according to the fifteenth embodiment of the present invention (corresponding to the claims 23 to 26 of the present invention).

In this figure, over an aperture 1104 opened in a base 1101 made from a supporting substrate of a SOI wafer, a structure to be a doubly supported beam 1102 made from a silicon thin film of the same SOI wafer is extending. After processing the structure to be a doubly supported beam 1102, a buried oxide film 1103 of the SOI wafer present around the base 1101 is removed, and the structure to be a doubly supported beam 1102 and the base 1101 are directly jointed. Besides, a single doubly supported beam is shown here, but in the case of an oscillator of a sensor with a doubly supported beam array, an individual doubly supported beam has also the same structure as described above.

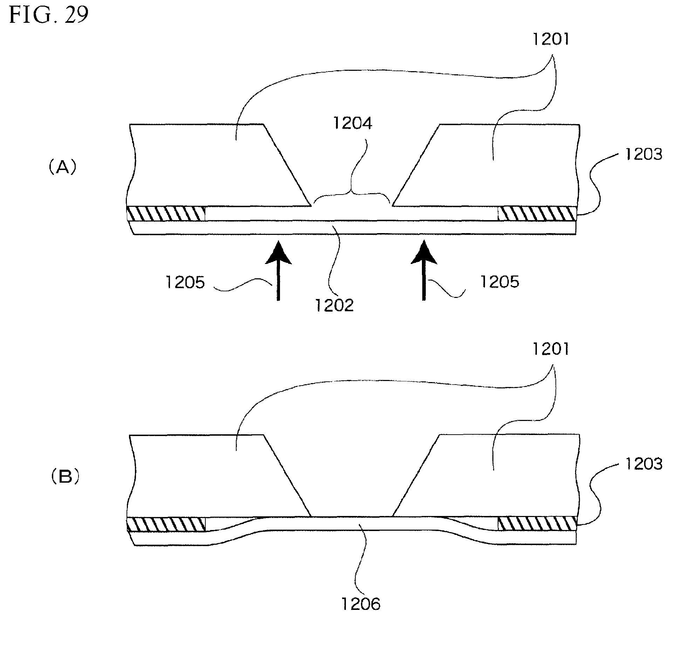

Figure 29 shows a cross sectional view of a fabrication process of a doubly supported beam as a sensor according to the sixteenth embodiment of the present invention (corresponding to the claims 27 to 30 of the present invention).

As shown in Fig.29, a process for etching a part of a buried oxide film 1203 between a structure to be a doubly supported beam 1202 and a base 1201 by, for example, hydrofluoric acid solution, followed by rinsing in water, and drying is required. When the thickness of the structure to be a doubly supported beam 1202 is thin enough, the structure to be a doubly supported beam 1202 is stuck to the base 1201 by the surface tension of the rinse water during the process of drying the rinse water (corresponding to the claim 29 of the present invention). Then, performing heat treatment is desirable to increase the strength of the jointing intensity between the structure to be a doubly supported beam 1202 and the base 1201, where it is preferable that the temperature is from 700°C to 1300°C, the most advantageously at 1100°C. In some cases, a treatment by an agent to activate the silicon surface may be added prior to the sticking process.

The sticking process using the surface tension of the rinse water as described above is to be avoided in the conventional micro machining technology. By using this process positively, however, sticking of the structure to be a doubly supported beam 1202 to the base 1201 is realized in the present invention.

Besides the rinsing process, the sticking may also be performed by a liquid having strong surface tension present between the structure to be a doubly supported beam and the base (corresponding to the claim 30 of the present invention).

A detailed description is given below. As shown in Fig.29(A),the structure to be a doubly supported beam 1202 made from a silicon thin film of a SOI wafer is not directly jointed to the base 1201. The process to jointing is to remove a part of the buried oxide film 1203 around the aperture 1204 of the base 1201, to give the structure to be a doubly supported beam 1202 deformation toward the direction of the base 1201 by applying a force 1205 thereto, and to joint the structure to be a doubly supported beam 1202 to the base 1201 as shown in Fig.29(B). As a result the doubly supported beam 1206 can be obtained. During this process a tension is applied to the structure to be a doubly supported beam 1202.

In addition, a specially designed structure may also be used to apply a tension.

Furthermore, by jointing to the base while heating and expanding the structure to be a doubly supported beam, a doubly supported beam with a tension included can also be realized.

Moreover, a structure to give a tension may also be used in some cases.

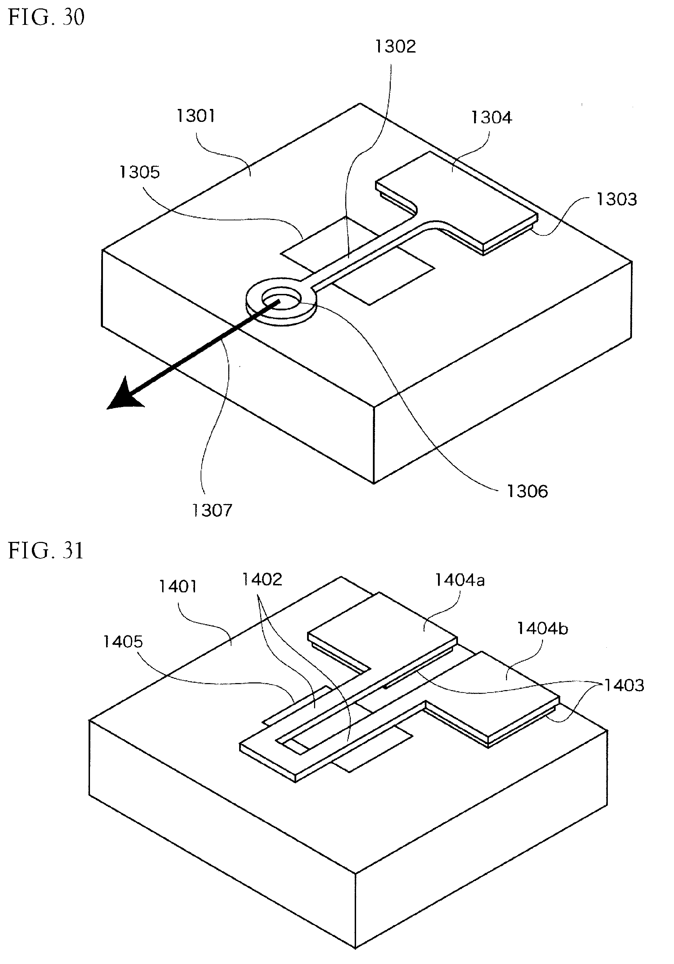

Figure 30 shows a perspective view illustrating an example of a structure for applying tension to a doubly supported beam according to the seventeenth embodiment of the present invention (corresponding to the claims 31 and 32 of the present invention).

In this figure, a structure to be a doubly supported beam 1302 made from a silicon thin film of a SOI wafer is configured to cross an aperture 1305 opened in a base 1301 made from a supporting substrate of the same SOI wafer. One of the ends of the structure to be a doubly supported beam 1302 is connected to a fixed part 1304, and the other is connected to a structure for applying a force 1306. The fixed part 1304 is fixed to the base 1301 through a buried oxide film 1303 present in between. The structure to be a doubly supported beam 1302 and the structure for applying a force 1306 are not fixed to the base 1301. During giving a force 1307 to the structure for applying a force 1306, the structure to be a doubly supported beam 1302 is jointed to the base 1301, thereby realizing the doubly supported beam with a tension included.

Figure 31 shows a perspective view illustrating an example of a structure for applying tension to a doubly supported beam according to the eighteenth embodiment of the present invention (corresponding to the claims 33 of the present invention).

In this figure, a structure to be a doubly supported beam 1402 made from a silicon thin film of a SOI wafer is configured to cross an aperture 1405 opened in a base 1401 made from a supporting substrate of the same SOI wafer. Both ends thereof are connected to a fixed part 1404a and 1404b. The fixed part 1404a and 1404b are fixed to the base 1401 through a buried oxide film 1403 present between them. The structure to be a doubly supported beam 1402 is not fixed to the base 1401. When a voltage is applied between the fixed part 1404a and the fixed part 1404b, a current flows through the structure to be a doubly supported beam 1402 and heat is generated to expand the structure to be a doubly supported beam 1402. During this situation, the structure to be a doubly supported beam 1402 is jointed to the base 1401, thereby realizing the doubly supported beam with a tension included.

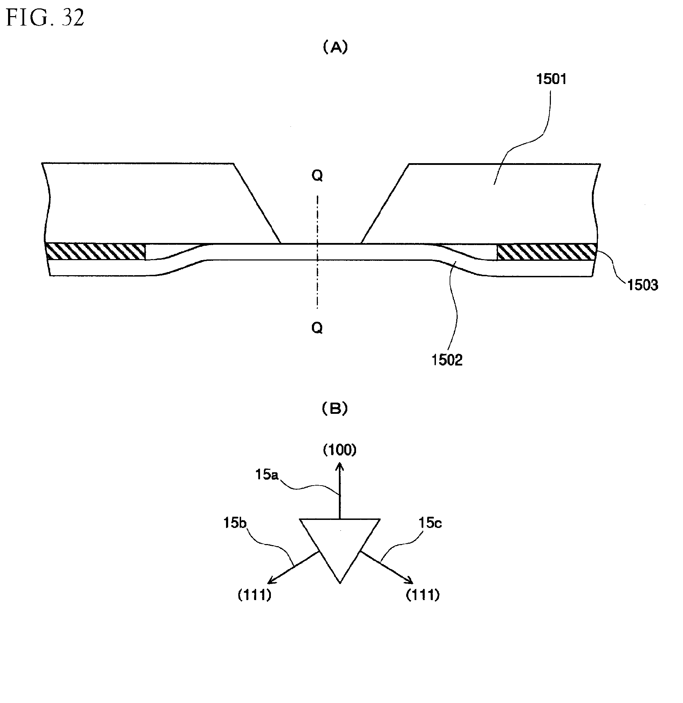

Figure 32 shows a structure of a doubly supported beam according to the nineteenth embodiment of the present invention. Figure 32(A) is a cross sectional view thereof, and figure 32(B) is a cross sectional view along a line Q-Q shown in Fig.32(A) (corresponding to the claims 34 of the present invention).

As shown in these figures, a doubly supported beam 1502 made from a silicon thin film of an SOI wafer is jointed to a base 1501 across an aperture opened in the base made from a supporting substrate of the same SOI wafer. 1503 is a buried oxide film. The doubly supported beam 1502 has a triangular pillar shape constituted of a silicon (100) plane 15a and two silicon (111) planes 15b and 15c as shown in Fig.32(B). The silicon (100) plane 15a is a surface orientation which the silicon thin film of the SOI wafer originally has. The silicon (111) planes 15b and 15c are planes resulted from the anisotropic etching using aqueous solution such as potassium hydroxide.

In such a structure the silicon (111) planes of the doubly supported beam have reduced surface roughness because these planes appear due to very slow etching speed, and the silicon (100) plane is a very smoothly finished plane of the silicon thin film of the SOI wafer, and as a result the surface roughness of the doubly supported beam is suppressed to a low level. In a miniaturized doubly supported beam, the surface roughness is a primary origin of decreasing the Q-factor of the mechanical oscillation, therefore the doubly supported beam of this probe has a higher Q-factor. As a result, the resonant frequency changes steeply as a function of a force or an adsorbed mass, thereby realizing an oscillator of a sensor with high detection sensitivity.

The present invention is not limited to the embodiments described above, and various modifications are possible based on the principle of the present invention. These are not excluded from the scope of the present invention.

Based on the present invention, following advantages can be obtained.
(A) The starting point of the cantilever can be defined at the front edge of the base, and the length of the cantilever can be determined independently of the alignment accuracy and the etching amount. The first problem can be solved due to these advantages (Refer to the Claims 1 to 22).
(B) By using a surface tension, jointing can be performed automatically, thereby simplifying the process and increasing the yield (Refer to the Claims 9, 10, 14, 15, 17, 22, 29 and 30).
(C) The cantilever is processed on the base, and is protruded out of the base in the final stage, thereby reducing the a risk to give damage to the probe tip during the fabrication process (Refer to the Claims 11 to 20).
(D) By utilizing an external force, a strong moving force can be realized, which is convenient in the case where a large protrusion distance is necessary (Refer to the Claim 16) .
(E) By utilizing a microscope, the protrusion distance of the cantilever can be controlled (Refer to the Claim 11 to 20).
(F) By utilizing a microscope, a mechanical oscillator with different protrusion distance of the cantilever can be fabricated from the same structure. (Refer to the Claim 11 to 20).
(G) By providing a stopper, the protrusion distance can be adjusted without accurately controlling the external force (Refer to the Claim 12).
(H) By using a surface tension, moving the cantilever can be performed automatically, thereby simplifying the process and increasing the yield. The protrusion distance of the cantilever can be controlled based on the structure. In addition, when jointing the cantilever to the base is also performed by using a surface tension, these two processes can be carried out simultaneously, thereby simplifying the process furthermore (Refers to the Claim 14 and 15).
(I) By utilizing a centrifugal force, a strong moving force can be realized, which is convenient in the case where a large protrusion distance is necessary. Depending on the strength of the centrifugal force, the protrusion distance can be controlled (Refer to the Claim 18).
(J) By providing a stopper, the protrusion distance can be adjusted without accurately controlling the centrifugal force (Refer to the Claim 12).
(K) When jointing the cantilever to the base is performed by using a surface tension, if removing the liquid is carried out based on the principle of the centrifugal separation, the removing process and the moving process by the centrifugal force can be combined into one process, thereby simplifying the fabrication process (Refer to the Claim 18).
(L) By utilizing an electrostatic attractive force, the protrusion distance can be adjusted by a voltage (Refer to the Claim 20).
(M) By providing a stopper, the protrusion distance can be adjusted without accurately controlling the voltage (Refer to the Claim 12).
(N)The silicon (111) planes of the cantilever of the mechanical oscillator have reduced surface roughness because these planes appear due to very slow etching speed, and the silicon (100) plane is a very smoothly finished plane of the silicon thin film of the SOI wafer, and as a result the surface roughness of the cantilever according to the present invention is suppressed to a low level. In a miniaturized cantilever, the surface roughness is a primary origin of decreasing the Q-factor of the mechanical oscillation, therefore the cantilever of this probe has a high Q-factor. As a result, the resonant frequency changes steeply as a function of a force, thereby realizing a scanning probe microscope with high detection sensitivity to a force (Refer to the Claim 21 and 22).
(O) In addition, the probe tip can be formed easily, and the position thereof lies on a center axis in principle, thereby providing an ideal shape as a probe of a scanning probe microscope (Refer to the Claims 21 and 22).
(P) The length of the cantilever can be determined only by a moving distance of the movement means in principle, and is independent of the accuracy of an aligner and the etching amount (Refer to the Claims 11 to 20).
(Q) The starting point of the doubly supported beam can be defined clearly, and the length of the doubly supported beam can be determined independently of the alignment accuracy and the etching amount (Refer to the Claims 23 to 32).
(R) By using a surface tension in the process of the doubly supported beam, jointing can be performed automatically, thereby simplifying the process and increasing the yield (Refer to the Claims 29 and 30).
(S) By applying a surface tension to the doubly supported beam, suppressing a decrease of the Q-factor and at the same time increasing the resonant frequency can be realized (Refer to the Claims 31 to 33).
(T) By adjusting strength of a force for applying a tension to a doubly supported beam, a doubly supported beam with a desired resonant frequency can be realized (Refer to the Claims 31 to 33).
(U) Since larger amount of expansion can be obtained more easily by the spontaneous thermal expansion of material as compared to the expansion by applying an external force, a doubly supported beam with very strong tension can be realized (Refer to the Claim 33).
(V)The silicon (111) planes of the doubly supported beam have reduced surface roughness because these planes appear due to very slow etching speed, and the silicon (100) plane is a very smoothly finished plane of the silicon thin film of the SOI wafer, and as a result the surface roughness of the doubly supported beam according to the present invention is suppressed to a low level. In a miniaturized doubly supported beam, the surface roughness is a primary origin of decreasing the Q-factor of the mechanical oscillation, therefore the doubly supported beam of this sensor has a high Q-factor. As a result, the resonant frequency changes steeply as a function of a force and an adsorbed mass, thereby realizing a sensor with higher detection sensitivity (Refer to the Claim 34).

### INDUSTRIAL APPLICABILITY

The mechanical oscillator and the fabrication method thereof can be utilized as a probe of a scanning probe microscope or an oscillator of a sensor to detect a mass or a force.

## Claims

1. A mechanical oscillator fabricated by processing a wafer, comprising a cantilever having a starting point at a front edge of a base, the cantilever containing
the base formed from a supporting substrate of a SOI wafer, and
a structure to be a cantilever formed from a silicon thin film of the SOI wafer and protruding horizontally from the front edge of the base,
wherein the cantilever is realized by steps of removing a part of a buried oxide film between the base and the structure to be a cantilever, and directly jointing the structure to be a cantilever to a part containing at least the front edge of the base where the buried oxide film is removed.

2. The mechanical oscillator according to claim 1, wherein the cantilever is a probe of a scanning probe microscope.

3. The mechanical oscillator according to claim 1 or 2,
wherein the mechanical oscillator comprises the cantilever alone.

4. The mechanical oscillator according to claim 1 or 2,
wherein the mechanical oscillator comprises a cantilever array containing a plurality of the cantilevers.

5. The mechanical oscillator according to claim 4, wherein the cantilever array is configured on a line.

6. The mechanical oscillator according to claim 4, wherein the cantilever array is configured on a circumference of a circle.

7. A fabrication method of a mechanical oscillator fabricated by processing a wafer, **characterized by** forming steps of a cantilever having a starting point at a front edge of a base, the steps containing:
forming the base from a supporting substrate of a SOI wafer,
removing a part of a buried oxide film fixed to the base,
forming a structure to be a cantilever supported by the remaining buried oxide film,
protruding in advance the front edge of the structure to be a cantilever from the front edge of the base,
and
directly jointing the structure to be a cantilever in the protruded position to a part containing at least the front edge of the base.

8. The fabrication method of the mechanical oscillator according to claim 7, wherein a heat treatment is performed to strengthen the direct jointing.

9. The fabrication method of the mechanical oscillator according to claim 7, wherein the direct joint between the structure to be a cantilever and the base is performed by surface tension of rinse water during drying process of the rinse water.

10. The fabrication method of the mechanical oscillator according to claim 7, wherein the direct joint between the structure to be a cantilever and the base is performed by a liquid having strong surface tension inserted between the structure to be a cantilever and the base.

11. A fabrication method of a mechanical oscillator fabricated by processing a wafer, **characterized by** forming steps of a cantilever having a starting point at a front edge of a base, the steps containing:
forming the base from a supporting substrate of a SOI wafer,
removing a part of a buried oxide film fixed to the base,
forming a structure to be a cantilever supported by the remaining buried oxide film,
processing the front edge of the structure to be a cantilever first in the situation before protruding from the base,
protruding subsequently the front edge of the structure to be a cantilever from the front edge of the base by a movement means,
and
directly jointing the cantilever in the protruded position to a part containing at least the front edge of the base.

12. The fabrication method of the mechanical oscillator according to claim 11, wherein a stopper is added to the movement means.

13. The fabrication method of the mechanical oscillator according to claim 12, wherein the stopper is a stopper due to the surface tension.

14. The fabrication method of the mechanical oscillator according to claim 11, wherein the direct joint between the structure to be a cantilever and the base is performed by surface tension of rinse water during drying process of the rinse water.

15. The fabrication method of the mechanical oscillator according to claim 11, wherein the direct joint between the structure to be a cantilever and the base is performed by inserting a liquid having strong surface tension between the structure to be a cantilever and the base.

16. The fabrication method of the mechanical oscillator according to claim 11 or 12, wherein the structure to be a cantilever is connected to a mechanism with flexibility in the horizontal direction formed from the same silicon thin film as this structure, and the movement means moves the structure to be a cantilever by an external force.

17. The fabrication method of the mechanical oscillator according to claim 11 or 12, wherein the structure to be a cantilever is connected to a mechanism with flexibility in the horizontal direction formed from the same silicon thin film as this structure, and the movement means moves the structure to be a cantilever by a surface tension.

18. The fabrication method of the mechanical oscillator according to claim 16, wherein the structure to be a cantilever is moved in the horizontal direction by a centrifugal force.

19. The fabrication method of the mechanical oscillator according to claim 18, wherein the cantilever is arranged along a circumference of a circular plate substrate, and applying the centrifugal force is performed by rotating the substrate.

20. The fabrication method of the mechanical oscillator according to claim 16, wherein the structure to be a cantilever is connected to an electrostatic micro actuator formed from the same silicon thin film as this structure, and the structure to be a cantilever is deformed in the horizontal direction by driving the electrostatic micro actuator.

21. The mechanical oscillator according to claim 1 or 2,
wherein the cantilever is of a thin wire with a triangular pillar shape consists of two silicon (111) planes and one silicon (100) plane, and the front edge of the cantilever is terminated by another silicon (111) plane.

22. A fabrication method of the mechanical oscillator according to claim 21, **characterized by**:
forming a thin wire with a triangular pillar shape consists of two silicon (111) planes and one silicon (100) plane by processing a silicon thin film of a SOI wafer,
removing a part of a supporting substrate and a buried oxide film under the thin wire from the supporting substrate side,
forming a silicon (111) plane to be a front edge of the cantilever by anisotropic etching of the thin wire by providing an etching solution from the removed side,
moving then the cantilever to protrude from the supporting substrate and the removed part of the buried oxide film by a movement means,
and
sticking the cantilever to a base by the surface tension of the solution.

23. A mechanical oscillator fabricated by processing a wafer, **characterized by** comprising a doubly supported beam having a starting point at a periphery of an aperture of a base, and containing:
the base formed from a supporting substrate of a SOI wafer,
and
a structure to be a doubly supported beam formed from a silicon thin film of the SOI wafer and extending over the aperture of the base,
wherein the doubly supported beam is realized by steps of removing a part of a buried oxide film between the base and the structure to be a doubly supported beam, and directly jointing a part of the structure to be a doubly supported beam to a part containing at least the front edge of the base.

24. The mechanical oscillator according to claim 23,
wherein the doubly supported beam is an oscillator of a sensor to measure a mass or a force.

25. The mechanical oscillator according to claim 23 or 24,
wherein the mechanical oscillator comprises the doubly supported beam alone.

26. The mechanical oscillator according to claim 23 or 24,
wherein the mechanical oscillator comprises a doubly supported beam array containing a plurality of the doubly supported beams.

27. A fabrication method of a mechanical oscillator fabricated by processing a wafer, **characterized by** forming steps of a doubly supported beam having a starting point at a periphery of an aperture of a base, the steps containing:
forming the base from a supporting substrate of a SOI wafer,
forming a structure to be a doubly supported beam formed from a silicon thin film of the SOI wafer and extending over the aperture of the base,
removing a part of a buried oxide film between the base and the structure to be a doubly supported beam,
and
directly jointing a part of the structure to be a doubly supported beam to a part containing at least the front edge of the base.

28. The fabrication method of the mechanical oscillator according to claim 27, wherein a heat treatment is performed to strengthen the direct jointing.

29. The fabrication method of the mechanical oscillator according to claim 27, wherein the direct joint between the structure to be a doubly supported beam and the base is performed by surface tension of rinse water during drying process of the rinse water.

30. The fabrication method of the mechanical oscillator according to claim 27, wherein the direct joint between the structure to be a doubly supported beam and the base is performed by inserting a liquid having strong surface tension between the structure to be a doubly supported beam and the base.

31. The fabrication method of the mechanical oscillator according to claim 27, wherein the structure to be a doubly supported beam is jointed to the base while a tension being applied.

32. The fabrication method of the mechanical oscillator according to claim 27, **characterized by** leaving a tension behind in the structure to be a doubly supported beam by applying an external expanding force.

33. The fabrication method of the mechanical oscillator according to claim 27, wherein a tension is left behind in the structure to be a doubly supported beam by increasing the length of the structure to be a doubly supported beam temporarily by thermal expansion, and then returning back to the room temperature after jointing to the base.

34. The mechanical oscillator according to claim 23,
wherein the structure to be a doubly supported beam is of a triangular pillar shape consists of two silicon (111) planes and one silicon (100) plane.
